# EUROPEAN PATENT APPLICATION

(11) **EP 2 551 918 A1**
(43) Date of publication of application: **30.01.2013**
(21) Application number: 11759364.0
(22) Date of filing: 22.03.2011
(51) Int. Cl.: H01L 31/042

(54) **SOLAR CELL MODULE**

(30) Priority: 18.06.2010 JP 2010139788; 25.03.2010 JP 2010070382
(71) Applicant: Sharp Kabushiki Kaisha, Osaka-shi, Osaka 545-8522 (JP)
(72) Inventor: MIZUO, Kazuhiro, Osaka 545-8522 (JP); HORINAKA, Hajime, Osaka 545-8522 (JP); OBINATA, Ryosuke, Osaka 545-8522 (JP)
(74) Representative: Müller - Hoffmann & Partner
(86) International application number: PCT/JP2011/056747
(87) International publication number: WO 2011/118559

(57) **Abstract**

A solar cell module of the present invention includes a solar cell panel having a laminated-glass structure in which a solar cell 18a configured to carry out photoelectric conversion of sunlight is interposed between a light receiving surface glass 18b and a rear surface glass 18c. At least one long supporting member 19 is disposed and secured on a surface of the rear surface glass 18c, along a longitudinal direction of the solar cell panel 18.

## Description

### Technical Field

The present invention relates to a solar cell module including a solar cell panel having a laminated-glass structure in which a solar cell that carries out photoelectric conversion of sunlight is interposed between a light receiving surface glass and a rear surface glass.

### Background Art

In photovoltaic power generating systems, a solar cell module as a structure is supportably secured on an attachment stand. In the attachment stand, for example, a plurality of crosspieces arranged next to each other in parallel are secured, and a plurality of solar cell modules are supported across the crosspieces.

In such an attachment stand, each of the solar cell modules needs to have frame end portions secured on respective crosspieces. Generally, each of the solar cell modules has a frame end portion screwed at a plurality of portions, and this screwing work is cumbersome.

Thus, in patent document 1, a crosspiece includes securing hooks at a plurality of portions, a frame of a solar cell module includes engagement recesses at a plurality of portions, and the solar cell module is secured with the engagement recesses on the frame of the solar cell module are engaged with the securing hooks on the crosspiece. Thus, an attempt to simplify the work is facilitated.

### Related Art Document

### Patent Document

Patent Document 1: Japanese Unexamined Patent Application Publication No. 9-235844.

### Summary of the Invention

### Problems to be Solved by the Invention

In patent document 1, a plurality of crosspieces and a plurality of supporting members are assembled into double crosses to establish an attachment stand for a solar cell module. Furthermore, the solar cell module has the periphery of a solar cell panel reinforced with a frame. Thus, both the attachment stand and the solar cell module have sufficient strength. This, however, leads to an unnecessary large piece-part count and a heavy total weight of the photovoltaic power generating system as a whole.

Especially, in the solar cell module, the periphery of the solar cell panel is held by the frame. Thus, when the solar cell panels are disposed next to each other on the attachment stand, distances among the solar cell panels themselves are widened due to the frame. Accordingly, the solar cell panels are less efficiently installed.

Furthermore, the frame leads to the heavier weight and the larger outer shape of the solar cell module itself. Thus, the solar cell module is difficult to be installed by a single worker, and efficiency of installation on the attachment stand is degraded.

Moreover, in patent document 1, the solar cell module is moved downward in the slanting direction on a slanted surface of a roof and the like so that the engagement recesses of the frame of the solar cell module engage respectively with the securing hooks on the crosspiece. Unfortunately, moving the heavy solar cell module downward in the slanting direction is difficult and dangerous. Furthermore, there may be a case where the engagement recesses of the frame of the solar cell module fail to engage respective with the securing hooks when the solar cell module is moved downward in the slanting direction. In this case, the solar cell module is likely to slip off, and thus the work becomes even more dangerous.

The present invention is made to solve the problems and an object of the present invention is to provide a solar cell module that does not use the frame surrounding the periphery of the solar cell panel to thereby have a smaller size and a lighter weight so as to be installed more efficiently and more easily on the attachment stand.

### Means of Solving the Problems

To solve the problems, a solar cell module according to an aspect of the present invention includes a solar cell panel having a laminated-glass structure in which a solar cell configured to carry out photoelectric conversion of sunlight is interposed between a light receiving surface glass and a rear surface glass. At least one long supporting member is disposed and secured on a surface of the rear surface glass, along a longitudinal direction of the solar cell panel.

According to this feature, the long supporting member disposed and secured on the surface of the rear surface glass also serves as a member for maintaining the strength of the rear surface glass. Thus, the strength of the solar cell panel as a whole is maintained.

In the solar cell module according to the aspect of the present invention, the at least one supporting member may include a plurality of supporting members disposed along a short direction of the solar cell panel at an interval.

By thus disposing the plurality of supporting members along the short direction of the solar cell panel, the solar cell panel can be stably placed and secured on an attachment stand without rattling in the short direction.

In the solar cell module according to the aspect of the present invention, an end portion of the at least one supporting member may protrude from an end portion of the solar cell panel. With the end portion of a longitudinal direction of the supporting member thus protruding from the end portion of the solar cell panel, when placing the solar cell module on the attachment stand, the positions of the end portion of the supporting member and the attachment position on the side of the attachment stand can be visually matched easily. Thus, the solar cell module can be placed and secured on the attachment stand more easily.

In the solar cell module according to the aspect of the present invention, the at least one supporting member may include an engagement portion at the protruding end portion. With this structure, attachment steps can be reduced to contribute to the attempt to simplify the attachment work.

In the solar cell module according to the aspect of the present invention, the at least one supporting member may include a long main plate, side plates bent downwardly from both sides along a longitudinal direction of the main plate and engagement portions bent upwardly at both end portions of the longitudinal direction of the main plate.

With this structure, the supporting member has an approximately light-gauge channel steel shape. Thus, the supporting member attached to the attachment stand and supporting the entire solar cell panel can have sufficient strength to withstand the weight of the solar cell panel maintained.

In the solar cell module according to the aspect of the present invention, the at least one supporting member may include a long main plate, side plates bent downwardly from both side portions along a longitudinal direction of the main plate, bottom plates bent inwardly from lower end portions of the side plates, inner side plates bent upwardly from opposing inner side end portions of the bottom plates, and engagement portions bent upwardly at both end portions of the longitudinal direction of the main plate.

With this structure, the supporting member attached to the attachment stand and supporting the entire solar cell panel can have sufficient strength to withstand the weight of the solar cell panel maintained, and can be sufficiently used for many years.

In the solar cell module according to the aspect of the present invention, both end portions of the longitudinal direction of the side plates may each be partly notched to be in an L shape. With this structure, when the solar cell module is placed on the horizontal crosspiece of the attachment stand, a contact portion of the side plate of the supporting member contacts the horizontal crosspiece. Thus, the installation is facilitated.

In the solar cell module according to the aspect of the present invention, the at least one supporting member may be adhered and secured on the rear surface glass of the solar cell panel with a double-sided tape including adhesion layers on both surfaces of a cushion member.

With this structure, the double-sided tape including adhesion layers on both surfaces of the cushion member is used to secure the supporting member together with the solar cell panel. Thus, even when the supporting member and the solar cell panel thermally contract or expand due to the influence of a peripheral environment (temperature change) after the attachment to the attachment stand for example, stress caused by the difference in coefficient of thermal expansion between the supporting member and the solar cell panel (the rear surface glass to be specific) at that time can be absorbed. Thus, stress load on the solar cell panel can be reduced so that damage such as cracks can be prevented.

In the solar cell module according to the aspect of the present invention, the light receiving surface glass may be thinner than the rear surface glass. With such a thin light receiving surface glass, an attempt to reduce the weight of the solar cell module as a whole can be facilitated.

If the thin light receiving surface glass is used, there is also an advantage that high light transmissibility equivalent to that of white glass can be secured with blue glass.

In the solar cell module according to the aspect of the present invention, an external dimension of the front surface glass may be equal to or smaller than an external dimension of the rear surface glass. With the external dimension of the thin front surface glass being equal to or smaller than the external dimension of the thick rear surface glass, when placing the solar cell modules next to each other on the attachment stand, end portions of the thick rear surface glass is likely to first contact an attachment tool for the securing to the attachment stand and an end portion of the solar cell module to be adjoiningly placed next. Thus, the attachment tool and the end portion of the solar cell module to be adjoiningly placed are less likely to contact the thin (that is, low-strength) front surface glass. Thus, the risk of damaging the surface glass when attaching the solar cell panel to the attachment stand can be reduced.

### Effect of the Invention

According to the aspect of the present invention, the long supporting member disposed and secured on the surface of the rear surface glass also serves as a member for maintaining the strength of the rear surface glass. Thus, the strength of the solar cell panel as a whole can be maintained.

### Brief Description of the Drawings

[FIG. 1] FIG.1 is a perspective view of an entire structure of a photovoltaic power generating system in which solar cell modules are placed on an attachment stand.
[FIG. 2] FIG. 2 is a perspective view of the solar cell module, as viewed from a light receiving surface side.
[FIG. 3] FIG. 3 is a perspective view of the solar cell module, as viewed from a rear surface side opposite from the light receiving surface side.
[FIG. 4] FIG. 4 is an exploded perspective view of the solar cell module, as viewed from the rear surface side.
[FIG. 5] FIG. 5 is a perspective view of a supporting member constituting the solar cell module.
[FIG. 6] FIGs. 6A, 6B, and 6C are respectively enlarged front, side, and cross-sectional views of an end portion of the supporting member.
[FIG. 7] FIG. 7 is an enlarged perspective view of a vicinity of the end portion of the supporting member in the solar cell module.
[FIG. 8] FIGs. 8A and 8B are respectively a front view and a side view of another shape of the supporting member constituting the solar cell module.
[FIG. 9] FIGs. 9A and 9B are partially enlarged cross-sectional views of the solar cell panel.
[FIG. 10] FIG. 10 is a perspective view of a base crosspiece constituting the attachment stand shown in FIG. 1.
[FIG. 11] FIG. 11 is a perspective view of an arm constituting the attachment stand shown in FIG. 1.
[FIG. 12] FIGs. 12A and 12B are respectively a perspective view and a plan view of a vertical crosspiece constituting the attachment stand shown in FIG. 1.
[FIG. 13] FIGs. 13A and 13B are respectively a perspective view and a plan view of a crosspiece member of a horizontal crosspiece constituting the attachment stand shown in FIG. 1.
[FIG. 14] FIG. 14 is a perspective view of another crosspiece member of the horizontal crosspiece constituting the attachment stand shown in FIG. 1.
[FIG. 15] FIGs. 15A and 15 B are respectively a perspective view and a front view of a triangle structure constituting the base crosspiece, the arm, and the vertical crosspiece.
[FIG. 16] FIG. 16 is a cross-sectional view of a coupling structure between the arm and the base crosspiece.
[FIG. 17] FIG. 17 is a perspective view of an attachment fitting used to couple and secure the horizontal crosspiece to the vertical crosspiece.
[FIG. 18] FIG. 18 is a perspective view of the attachment fitting shown in FIG. 17 attached to the vertical crosspiece.
[FIG. 19] FIG. 19 is a perspective view of the horizontal crosspiece coupled to the vertical crosspiece.
[FIG. 20] FIG. 20 is a perspective view of a coupling structure between crosspiece members.
[FIG. 21] FIG. 21 is a perspective view of a guide support constituting the attachment stand in FIG. 1.
[FIG. 22] FIGs. 22 are a front view, a plan view, and a side view of the guide support shown in FIG. 21.
[FIG. 23] FIG. 23 is a perspective view of an attachment fitting used to secure the guide support to the horizontal crosspiece.
[FIG. 24] FIG. 24 is a perspective view of the attachment fitting shown in FIG. 18 attached to the horizontal crosspiece.
[FIG. 25] FIG. 25 is a perspective view of a securing structure of the guide support using the attachment fitting.
[FIG. 26] FIG. 26 is a cross-sectional view of a securing structure shown in FIG. 20.
[FIG. 27] FIG. 27 is an exploded perspective view of the securing structure of the guide support using the attachment fitting.
[FIG. 28] FIG. 28 is a perspective view of a main structure of the attachment stand in this embodiment.
[FIG. 29] FIG. 29 is a perspective view illustrating a procedure for attaching the solar cell module to the attachment stand shown in FIG. 28.
[FIG. 30] FIG. 30 is a partially enlarged perspective view of an area around the guide support in the attachment stand shown in FIG. 29.
[FIG. 31] FIG. 31 is a partially enlarged perspective view of an area around the guide support that supports a final solar cell module in the attachment stand shown in FIG. 28.
[FIG. 32] FIG. 32 is a partially enlarged perspective view of an area around the guide support constituting a structure for preventing the supporting member supported by the guide support from sliding in an ascending order direction.
[FIG. 33] FIG. 33 is a partially enlarged perspective view of the area around of the guide support constituting the structure for preventing the supporting member supported by the guide support from sliding in the ascending order direction.
[FIG. 34] FIG. 34 is a cross-sectional view of a securing structure using a modification of the end portion of a tension bar in the solar cell module.
[FIG. 35] FIG. 35 is a cross-sectional view of a securing structure using modifications of the guide support and the attachment fitting in the attachment stand.
[FIG. 36] FIG. 36 is a perspective view of the guide support shown in FIG. 35.
[FIG. 37] FIG. 37 is a perspective view of the attachment fitting shown in FIG. 35.
[FIG. 38] FIG. 38 is a cross-sectional view of a securing structure using another modification of the guide support constituting the attachment stand.
[FIG. 39] FIG. 39 is a perspective view of the guide support shown in FIG. 38.
[FIG. 40] FIGs. 40A and 40B are respectively enlarged front and side views of an end portion of a modification of the supporting member.
[FIG. 41] FIG. 41 a cross-sectional view of another modification of the guide support constituting the attachment stand shown in FIG. 1.
[FIG. 42] FIGs. 42 are a front view, plan view, and a side view of the guide support shown in FIG. 41.
[FIG. 43] FIG. 43 is a perspective view of a securing structure of the guide support using the attachment fitting.
[FIG. 44] FIG. 44 is a cross-sectional view of the securing structure shown in FIG. 43.
[FIG. 45] FIG. 45 is an exploded perspective view of the securing structure of the guide support using the attachment fitting.

### Modes for Carrying out the Invention

An embodiment of the present invention will be described below by referring to the accompanying drawings.

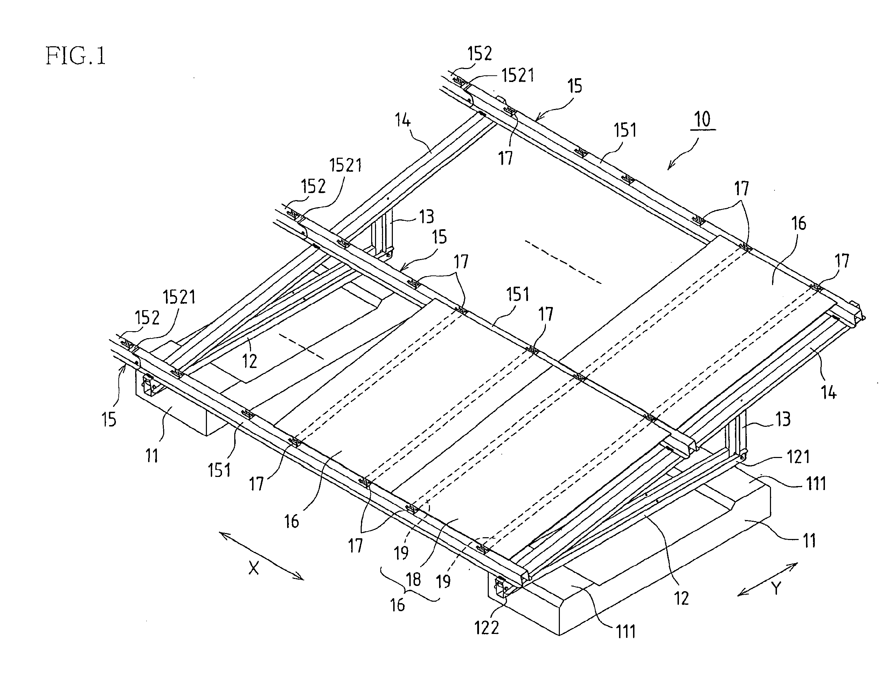

FIG.1 is a perspective view of an entire structure of a photovoltaic power generating system in which a plurality of solar cell modules 16 according to the present invention are placed on an attachment stand 10.

The photovoltaic power generating system of this embodiment can be used as a power plant for example. The attachment stand 10 roughly includes concrete foundations 11, base crosspieces 12, arms 13, vertical crosspieces 14, and horizontal crosspieces 15.

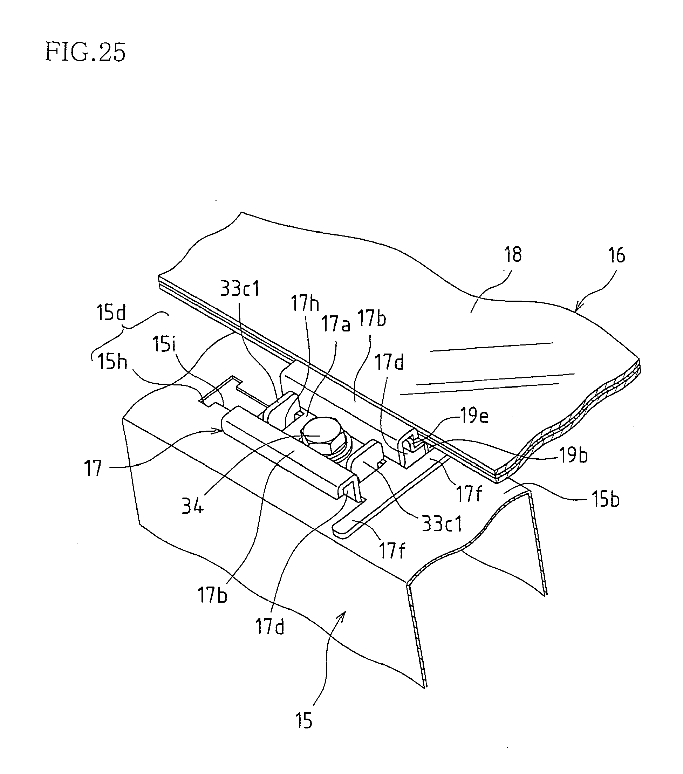

Specifically, a plurality of concrete foundations 11 are laid on the ground at equal intervals, and the base crosspieces 12 are secured on upper surfaces 111 of the respective concrete foundations 11 to be arranged next to each other at equal intervals. Each arm 13 is coupled to and vertically disposed on a rear end portion 121 of each base crosspiece 12. Each vertical crosspiece 14 is secured across a top end portion 122 of each base crosspiece 12 and an upper end portion of each arm 13 in a slanted manner. The horizontal crosspieces 15 are arranged next to each other on the vertical crosspieces 14 in such a manner that three horizontal crosspieces 15 cross the vertical crosspieces 14 at right angles. Thus, the horizontal crosspieces 14 are disposed at different heights along the slanted surface of the vertical crosspiece 14. The solar cell module 16 is placed in a slanted manner with both end portions of a longitudinal direction disposed across adjacent horizontal crosspieces 15. Both end portions of the solar cell module 16 are supportably secured with guide supports 17 (see FIG. 25 and the like) to be described later attached on predetermined positions on each horizontal crosspiece 15.

In the photovoltaic power generating system having such a structure, a plurality of solar cell modules 16 are placed next to each other in a horizontal row between the lower horizontal crosspiece 15 and the center horizontal crosspiece 15, while a plurality of solar cell modules 16 are placed next to each other in a horizontal row between the center horizontal crosspiece 15 and the upper horizontal crosspiece 15. In other words, the plurality of solar cell modules 16 are placed next to each other in two, upper and lower, rows on the three horizontal crosspieces 15. Between two horizontally adjacent vertical crosspieces 14, three solar cell modules 16 are placed next to each other in each of the upper and lower rows.

In the following description, the direction in which the concrete foundations 11 are arranged in FIG. 1 is assumed the X direction (left-right direction), and the direction orthogonal to the X direction is assumed the Y direction (front-rear direction).

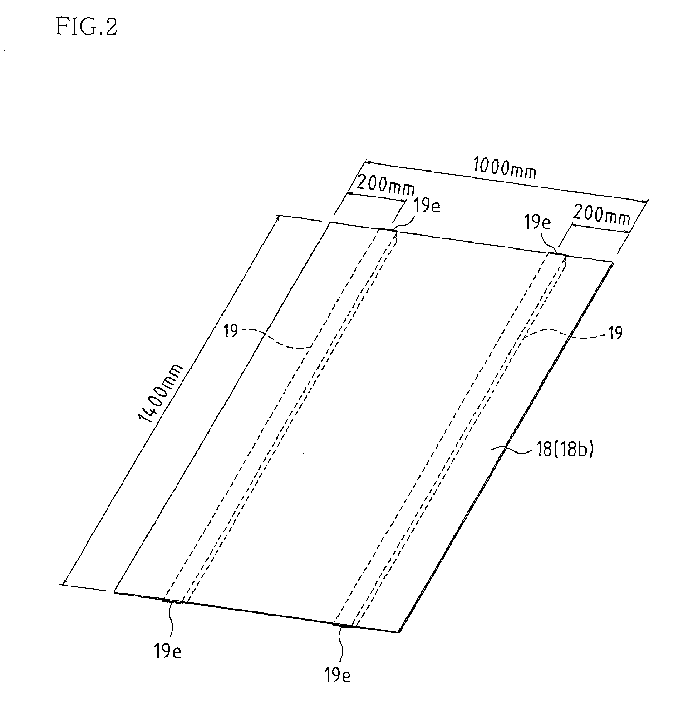

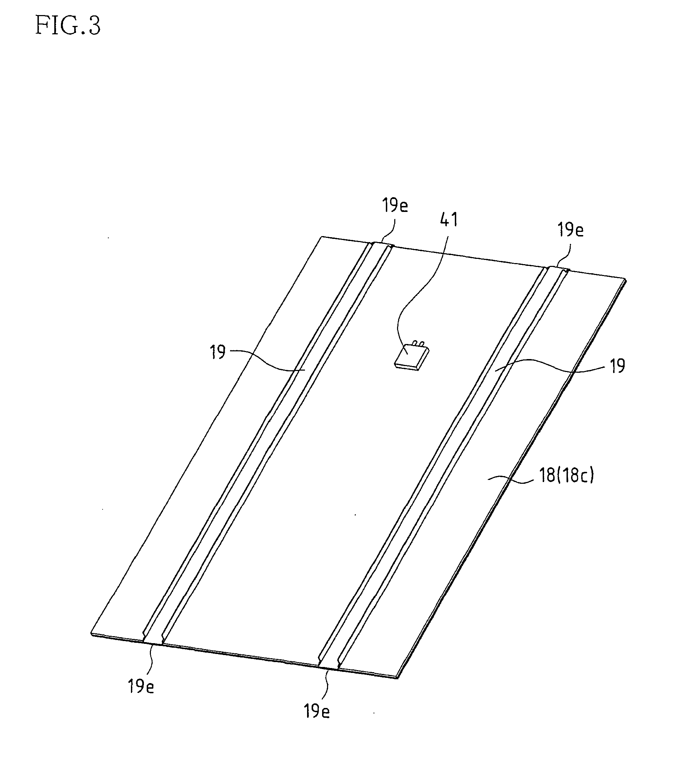

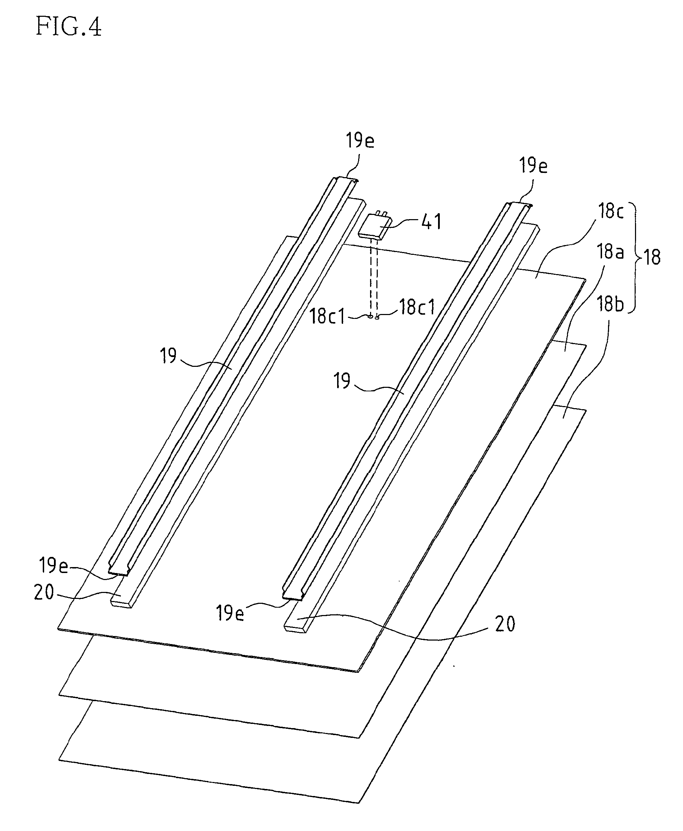

FIG. 2 to FIG. 4 show a structure of the solar cell module 16 according to this embodiment. FIG. 2 is a perspective view of the solar cell module 16, as viewed from a light receiving surface side. FIG. 3 is a perspective view of the solar cell module 16, as viewed from a rear surface side opposite from the light receiving surface side. FIG. 4 is an exploded perspective view of the solar cell module 16, as viewed from the rear surface side.

The solar cell module 16 according to this embodiment includes a solar cell panel 18 and two supporting members 19 also serving as attachment fittings for the attachment stand 10.

As shown in FIG. 4, the solar cell panel 18 has a laminated-glass structure in which a solar cell 18a that carries out photoelectric conversion of sunlight is interposed between a light receiving surface glass 18b and a rear surface glass 18c. The long supporting members 19 having a shape capable of attaching the solar cell panel 18 to the attachment stand 10 are disposed and secured on a surface of the rear surface glass 18c along the longitudinal direction of the solar cell panel 16. Two supporting members 19 are arranged in parallel with each other along the short direction of the solar cell panel 16 at a predetermined interval and at positions symmetrical with respect to the center line passing though the center of the short direction. The disposed positions are each position shifted from each side of the longitudinal direction toward the inner side for a predetermined distance. Specifically, the solar cell panel 18 has a rectangular shape having lengths of approximately 1400 mm and approximately 1000 mm respectively in the longitudinal and short directions in a plan view. The supporting members 19 are each disposed at a position shifted from each side of the longitudinal direction toward the inner side for approximately 200 mm (note that the distance is not limited to 200 mm). By thus arranging two supporting members 19 along the short direction on the solar cell panel 18, the solar cell module 16 is stably placed and secured on the attachment stand 10, without rattling in the short direction (left-right direction). With the supporting members 19 disposed at positions shifted towards the inner side for approximately 200 mm, balanced distribution of the weight of the solar cell panel 18 on the supporting members 19 can be achieved.

The supporting member 19 is adhered and secured on the surface of the rear surface glass 18c of the solar cell panel 18 using a double-sided tape 20 having adhesive layers on both sides of a cushion member. The adhesive layer may be an acrylic pressure sensitive adhesive layer. The cushion member may be a polyolefin, an acrylic rubber, or the like. With, the supporting members 19 thus being secured on the rear surface glass 18c of the solar cell panel 18 with the double-sided tapes 20 having the adhesive layers on both sides of a cushion member, even when the supporting member 19 and the solar cell panel 18 thermally contract or expand due to the influence of a peripheral environment (temperature change) after the attachment to the attachment stand 10 for example, stress caused by the difference in coefficient of thermal expansion between the supporting member 19 and the solar cell panel 18 (the rear surface glass 18c to be specific) at that time can be absorbed. Thus, stress load on the solar cell panel 18 can be reduced so that damage such as cracks can be prevented.

A reference numeral 41 in FIG. 3 and FIG. 4 denotes a terminal box that is for the purpose of electrically coupling an unillustrated output lead of a solar cell 18a drawn out from an opening portion 18c1 of the rear surface glass 18c.

Next, a shape of the supporting member 19 will be described.

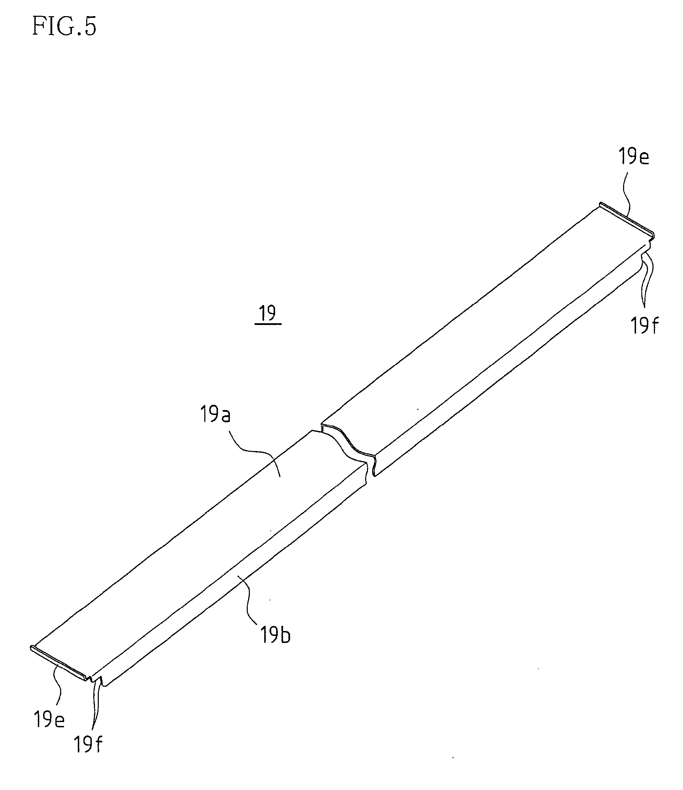

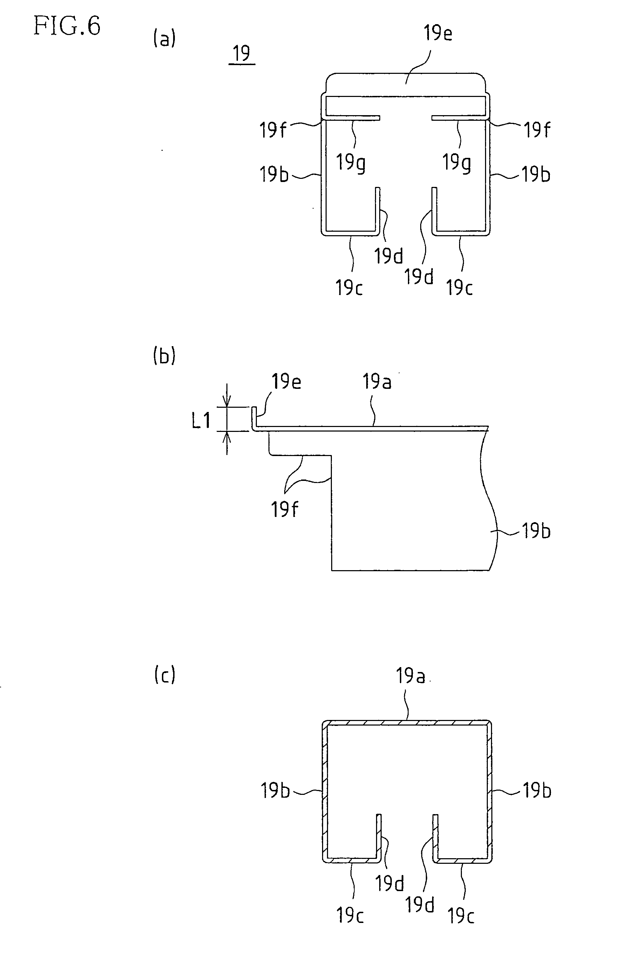

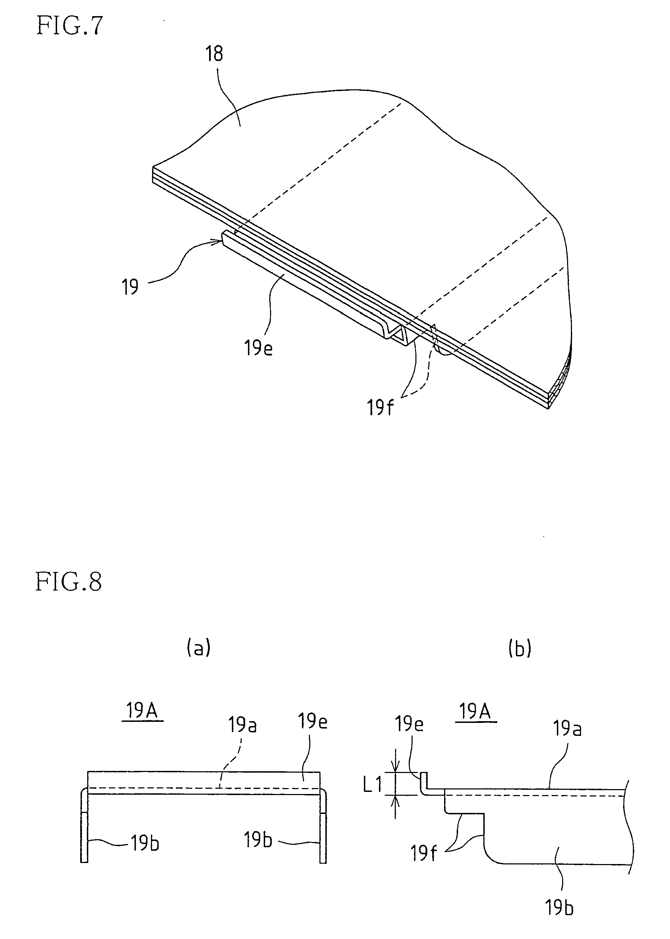

FIG. 5 is a perspective view of the supporting member 19. FIGs. 6A, 6B, and 6C are respectively enlarged front, side, and cross-sectional views of an end portion of the supporting member 19. FIG. 7 is an enlarged perspective view of a vicinity of the end portion of the supporting member 19 in the solar cell module 16.

The supporting member 19 shown in FIG. 5 and FIGs. 6A, 6B, and 6C includes a long main plate 19a, side plates 19b bent downwardly from both side portions along the longitudinal direction of the main plate 19a, bottom plates 19c bent inwardly from the lower end portions of the side plates 19b, inner side plates 19d bent upwardly from opposing inner side end portions of the bottom plates 19c, and L-shaped engagement portions 19e bent upwardly at the respective end portions of the longitudinal direction of the main plate 19a. The supporting member 19 has an approximately lip channel steel shape in a lateral cross section. Specifically, the supporting member 19 has the approximately lip channel steel shape with lip portions (the bottom plates 19c) having the top end sides bent inwardly (toward the main plate 19a) to form the inner side plates 19d so as to have even higher strength. Thus, the supporting members 19 attached to the attachment stand 10 and supporting the entire solar cell panel 18 can have sufficient strength to withstand the weight of the solar cell panel 18 maintained, and can be sufficiently used for many years.

As shown in FIG. 7, the supporting member 19 has both end portions of the longitudinal direction of the main plate 19a protruding from respective end portions of the longitudinal direction of the solar cell panel 18. The engagement portions 19e described above is formed at this protruding end portions. The engagement portion 19e has the L shape to be capable of engaging with the guide support 17 of the attachment stand 10.

With the engagement portions 19e as the end portions of the supporting member 19 thus protruding from the end portions of the sola cell panel 18, when placing the solar cell module 16 on the attachment stand 10, the positions of the engagement portions 19e of the supporting member 19 and attachment positions on the side of the attachment stand 10 can be visually matched easily. Accordingly, the solar cell module 16 can be placed and secured on the attachment stand 10 more easily. The protruding engagement portion 19e of the supporting member 19 has the shape to engage with an attachment fitting on the side of the attachment stand 10 upon placement on the attachment stand 10. Thus, the number of attachment fittings for attaching to the attachment stand 10 can be reduced, which in turn leads the reduction of the attachment steps, and thus contributes to the attempt to facilitate the attachment work.

In the supporting member 19, both ends of the longitudinal direction each side plate 19b are notched into an L-shape. Thus, contact portions 19f to be in contact with corner portions of the horizontal crosspieces 15 of the attachment stand 10 are formed. In the supporting member 19 shown in FIG. 5 and FIGs. 6A, 6B, and 6C, the contact portion 19f can be formed as follows. Each side plate 19b has a portion adjacent to each end portion of the longitudinal direction cut from a lower end edge to the vicinity of the upper end edge, and a notch piece 19g split off by the cutting on the end portion side of the side plate 19b is bent inwardly to be parallel with the main piece 19a (see FIGs. 6A and 6B). An appropriate length is cut so that the bent notch pieces 19g do not have top end portions in contact with each other.

FIGs. 8A and 8B show another shape of the supporting member. A supporting member 19A shown in FIGs. 8A and 8B includes the long main plate 19a, the side plates 19b that are bent downwardly from both sides along the longitudinal direction of the main plate 19a, and the engagement portions 19e bent upwardly from the respective end portions of the longitudinal direction of the main plate 19a. The supporting member 19A has an approximately top hat-shape (approximately light-gauge channel steel shape) in a lateral cross section. Even when the supporting member 19 has such an approximately light-gauge channel steel shape, sufficient strength of the supporting members 19A attached to the attachment stand 10 and supporting the entire solar cell panel 18 against the weight of the solar cell panel 18 can be maintained.

The supporting members 19 and 19A having such shapes can be made by cutting and bending a steel plate, or by extruding an aluminum material.

It is to be noted that the following description is given for a case where the supporting member 19 having the cross-sectional shape shown in FIG 5 to FIG. 7 is used.

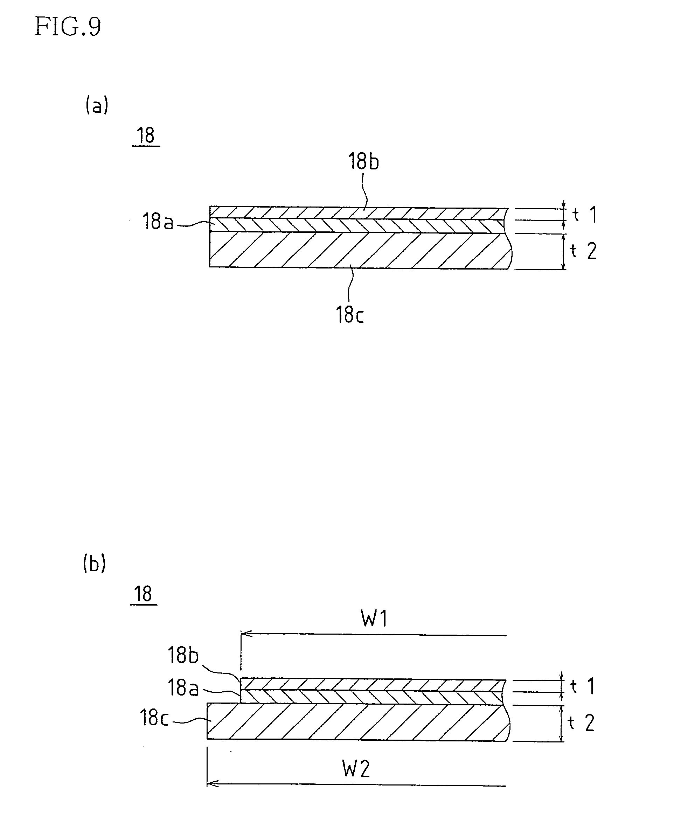

FIGs. 9 A and 9B are partially enlarged cross-sectional views of the solar cell panel.

As shown in FIG. 9A, in the solar cell panel 18, a plate thickness t1 of the light receiving surface glass 18b is smaller than a plate thickness t2 of the rear surface glass 18c (t1<t2). Specifically, the supporting members 19 are disposed on the rear surface glass 18c in this embodiment. The supporting members 19 serve as reinforcement for the rear surface glass 18c as well as attaching members for the attachment stand 10. Thus, even if the light receiving surface glass 18b can be thinner than the rear surface glass 18c, (more particularly, the light receiving surface glass 18b can be thinner than in a conventional case) there exist no problems, because the strength of the solar cell panel 18 is reinforced by the supporting members 19. Accordingly, in this embodiment, the light receiving surface glass 18b is made thin with sufficient strength secured so that the attempt to reduce the weight of the solar cell module 16 as a whole can be facilitated.

Here, in FIG. 9A, external dimensions of the front surface glass 18b and the back surface glass 18c are the same (thus, the end surfaces are flush). Alternatively, as shown in FIG. 9B, an external dimension W1 of the front surface glass 18b may be smaller than an external dimension W2 of the back surface glass 18c (W1<W2). It is to be noted that, in this case, a dimension of the solar cell 18a that carries out photoelectric conversion of sunlight is set in accordance with the dimension of the front surface glass 18b.

With the external dimension of the thin front surface glass 18b thus being equal to or smaller than the external dimension of the thick back surface glass 18c, when placing the solar cell modules 16 next to each other on the attachment stand 10, an end portion of the thick back surface glass 18c is likely to first contact the attachment fitting for securing to the attachment stand 10 and an end portion of the solar cell panel 18 of the solar cell module 16 to be adjoiningly placed next. Thus, the attachment fitting and the end portion of the solar cell panel 18 to be adjoiningly placed are less likely to contact the thin (that is, low-strength) front surface glass 18b. Thus, the risk of damaging the surface glass 18b when attaching the solar cell panel 18 to the attachment stand can be reduced.

The thin light receiving surface glass can secure high light transmissibility equivalent to that of white glass. Thus, the light receiving surface glass can be inexpensive blue glass. Accordingly, there is a further advantage that the manufacturing cost of the solar cell module can be reduced.

Next, the attachment stand 10 according to this embodiment will be described.

The attachment stand 10 according to this embodiment includes the concrete foundations 11, the base crosspieces 12, the arms 13, the vertical crosspieces 14, the horizontal crosspieces 15, and the guide supports 17 shown in FIG. 1. In addition, the supporting members 19 shown in FIG. 2 to FIG. 8 are also used as components of the attachment stand.

Next, the concrete foundation 11, the base crosspiece 12, the arm 13, the vertical crosspiece 14, the horizontal crosspiece 15, and the like constituting the attachment stand 10 will be described.

Each concrete foundation 11 is formed by forming a formwork on the ground and casting and curing concrete in the formwork. The concrete foundations 11 are disposed at equal intervals and include the horizontal upper surfaces 111 that are flush at the same height.

The upper surfaces 111 of the concrete foundations 11 are used as horizontal base surfaces. The base crosspieces 12 are secured on the respective base surfaces to be in parallel with each other at equal intervals. The base crosspieces 12, the arms 13, the vertical crosspieces 14, the horizontal crosspieces 15, and the like are coupled to one another. Thus, the attachment stand 10 is assembled. It is a matter of course that instead of the plurality of concrete foundations 11, foundations having other structures can be employed such as the mat foundation made by casting concrete uniformly in an entire installation area of the attachment stand.

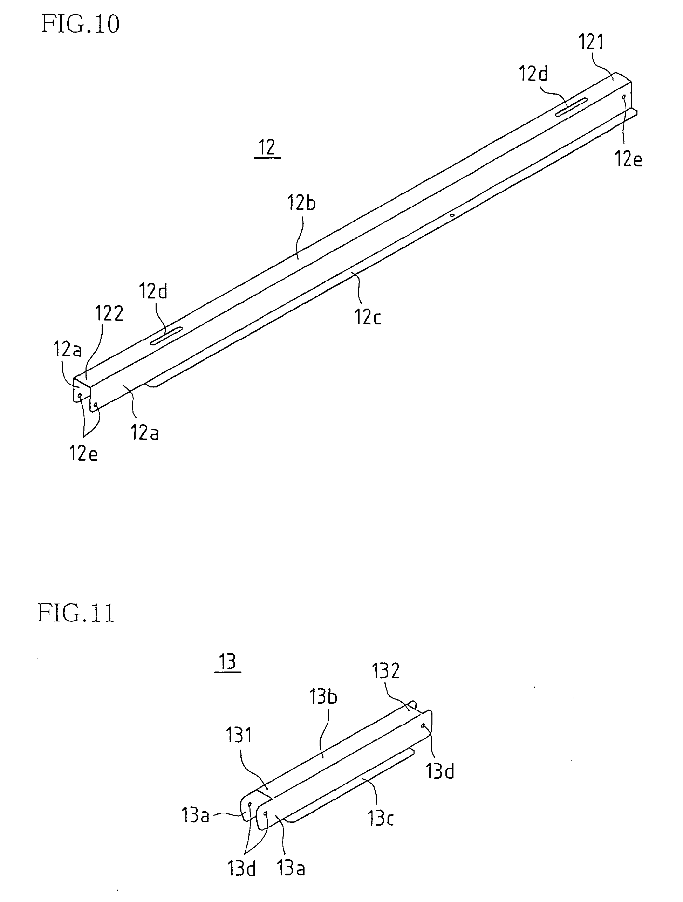

FIG. 10 is a perspective view of the base crosspiece 12. As shown in FIG. 10, the base crosspiece 12 includes a long main plate 12b, a pair of side plates 12a that are bent downwardly at both sides of the main plate 12b, and flanges 12c bent outwardly at sides of the respective side plates 12a. The base crosspiece 12 has an approximately top-hat cross-sectional shape. The main plate 12b of the base crosspiece 12 includes elongated holes 12d at the vicinity of both ends, and each side plate 12a includes punched holes 12e at both end portions.

FIG. 11 is a perspective view of the arm 13. As shown in FIG. 11, the arm 13 includes a long main plate 13b, a pair of side plates 13a bent downwardly at both sides of the main plate 13b, and flanges 13c bent outwardly at sides of the respective side plates 13a. The arm 13 has an approximately top-hat cross-sectional shape. Each side plate 13a of the arm 13 includes punched holes 13d at both end portions.

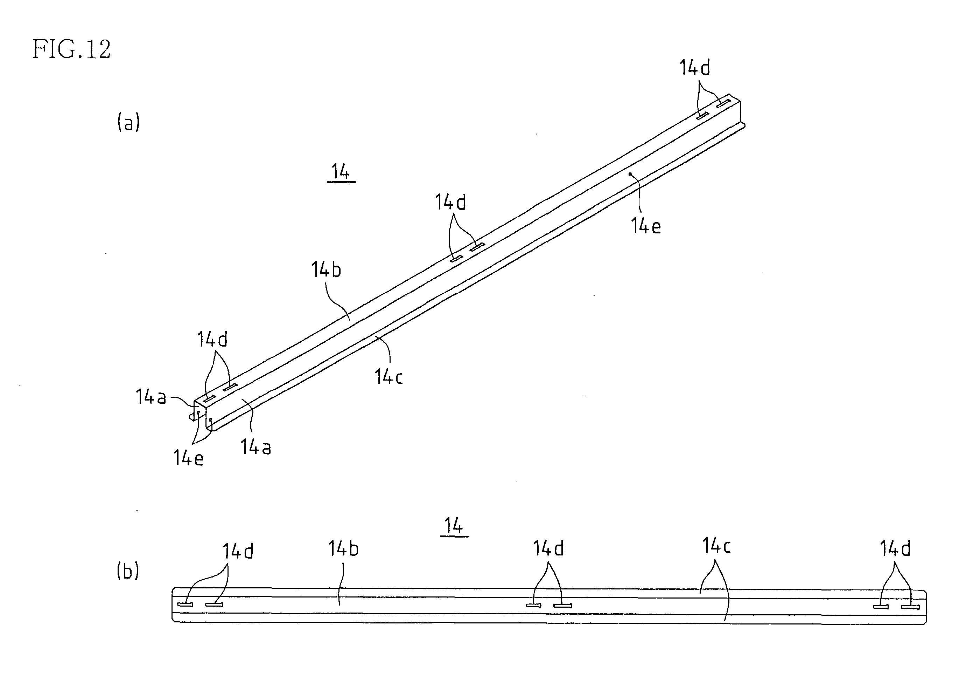

FIGs. 12A and 12B are respectively a perspective view and a plan view of the vertical crosspiece 14. As shown in FIG. 7, the vertical crosspiece 14 includes a long main plate 14b, a pair of side plates 14a bent downwardly at both sides of the main plate 14b, and flanges 14c bent outwardly at sides of the respective side plates 14a. The vertical crosspiece 14 has an approximately top-hat cross-sectional shape. The main plate 14b of the vertical crosspiece 14 includes a pair of T-shaped holes 14d at each of vicinity of both ends and a center portion. Each side plate 14a includes punched holes 14e at top end portions and further includes a punched hole 14e at a position closer to the rear end portion than to the center portion.

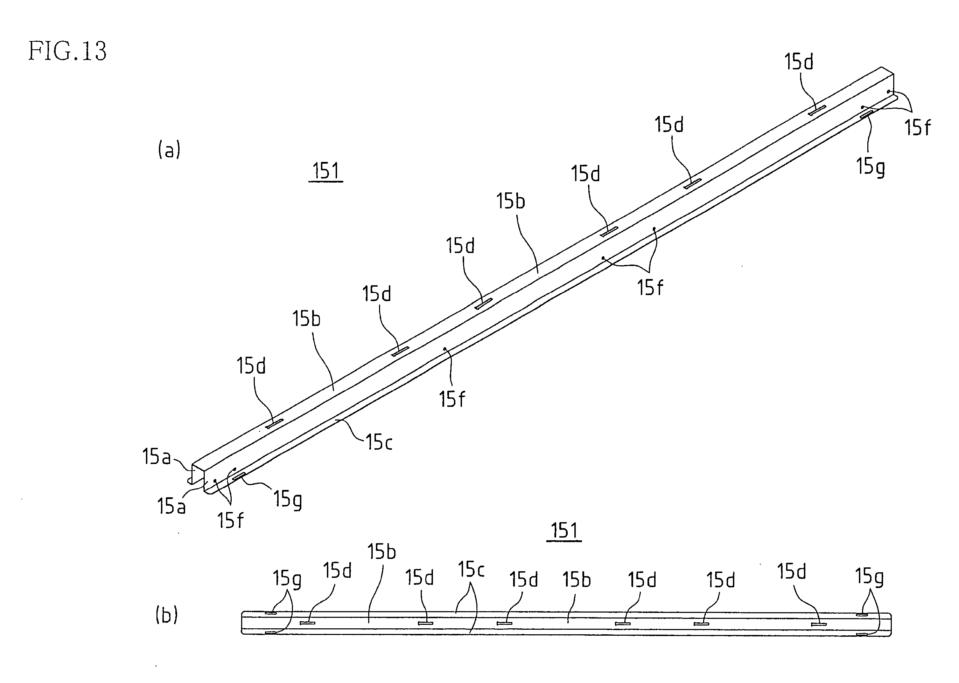

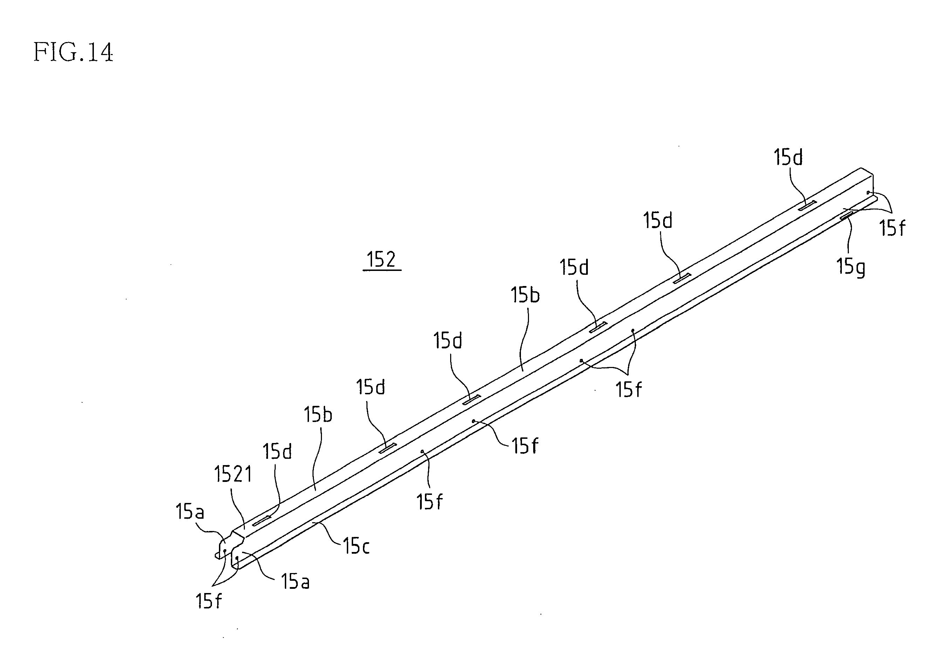

FIGs. 13 A and 13B and FIG. 14 show a crosspiece member defining the horizontal crosspiece 15. As shown in FIG. 1, the horizontal crosspiece 15 needs to be extremely long in the X direction, and thus is difficult to be formed as a single member. Thus, the horizontal crosspiece 15 is made by coupling a plurality of crosspiece members together.

Assuming a rightmost crosspiece member 151 of the horizontal crosspiece 15 in FIG. 1 as a first crosspiece member, FIGs. 13A and 13B are respectively a perspective view and a plan view of this first crosspiece member 151. As shown in FIGs. 13A and 13B, the first crosspiece member 151 includes a long main plate 15b, a pair of side plates 15a bent downwardly at both sides of the main plate 15b, and flanges 15c bent outwardly at sides of the respective side plates 15a. The first crosspiece member 151 has an approximately top-hat cross-sectional shape. The main plate 15b of the crosspiece member 151 includes T-shaped holes 15d along the longitudinal direction at six positions on the center axis along the longitudinal direction. Each side plate 15a includes punched holes 15f at a plurality of portions. Each flange 15c includes elongated holes 15g at both end portions.

The crosspiece member 151 has a length slightly larger than the intervals among the vertical crosspieces 14 shown in FIG. 1. Thus, the crosspiece member 151 can be disposed across the vertical crosspieces 14.

Assuming the rightmost crosspiece member 151 in FIG. 1 as the first crosspiece member, FIG. 14 is a perspective of one of second and after crosspieces 152 more on the left side than the first crosspiece member 151. As shown in FIG. 14, this one of second and after crosspiece member 152 also includes the long main plate 15b, a pair of side plates 15a, and flanges 15c to have the approximately top-hat cross-sectional shape like the first crosspiece member 151 shown in FIGs. 13A and 13B. The main plate 15b includes the T-shaped holes 15d along the longitudinal direction at six positions on the center line along the longitudinal direction. Each side plate 15a includes the punched holes 15f at a plurality of portions. Each flange 15 c includes the elongated hole 15g at one end portion.

The crosspiece member 152 has a length approximately the same as the intervals among the vertical crosspieces 14 shown in FIG. 1, and thus is slightly shorter than the crosspiece member 151.

Each of the base crosspiece 12, the arm 13, the vertical crosspiece 14, and the horizontal crosspiece 15 includes the main plate, the pair of side plates bent downwardly at both sides of the main plate, and the flanges bent outwardly from sides of the respective side plates to have the approximately top-hat cross-sectional shape. All the top-hat cross sectional shapes are of the same size. Moreover, all the components are made of plated steel sheets having the same thickness subjected to cutting or punching and then bending. Thus, the same material and processing device can be commonly used. This facilitates the attempt to largely reduce the cost.

Next, a triangle structure formed by assembling the base crosspiece 12, the arm 13, and the vertical crosspiece 14 on the concrete foundation 11 will be described.

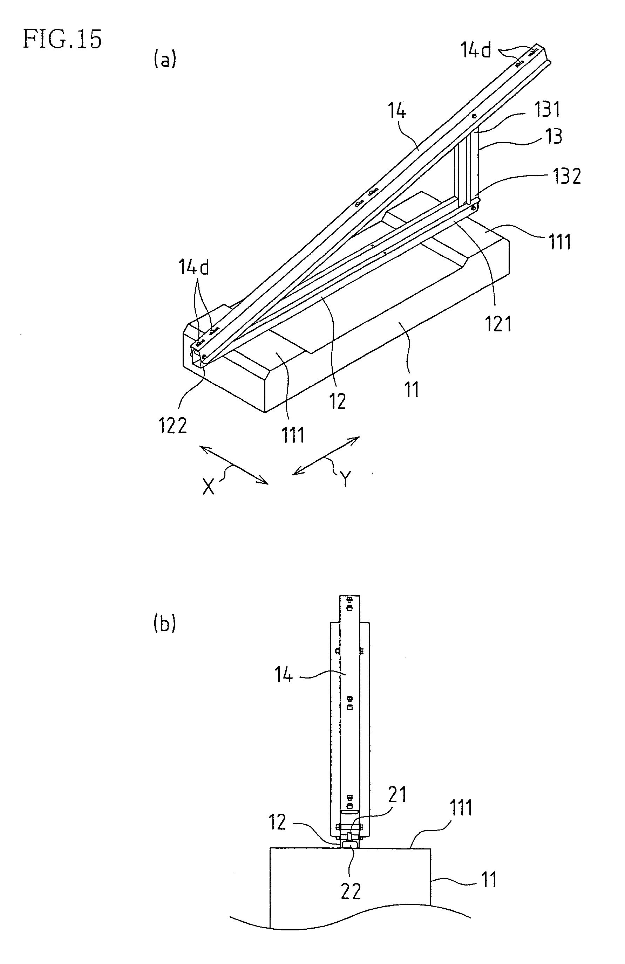

FIGs. 15A and 15B are respectively a perspective view and a front view of the triangle structure including the base crosspiece 12, the arm 13, and the vertical crosspiece 14. As shown in FIGs. 15A and 15B, the base crosspiece 12 is secured on the upper surface 111 of the concrete foundation 11, the arm 13 is coupled to and vertically disposed on the rear end portion 121 of the base crosspiece 12, and the vertical crosspiece 14 is secured across the top end portion 122 of the base crosspiece 12 and the upper end portion 131 of the arm 13 in a slanted manner. Thus, the triangle structure including the base crosspiece 12, the arm 13, and the vertical crosspiece 14 is established.

Here, two bolts 21 are disposed to protrude from the upper surface 111 of the concrete foundation 11 in advance and are inserted into the elongated holes 12d of the main plate 12b of the base crosspiece 12 with the main plate 12b of the base crosspiece 12 facing downward, and thus the main plate 12b is placed on the upper surface 111 of the concrete foundation 11. The base crosspiece 12 can move along the elongated holes 12d (moved in the Y direction in FIG. 1) with the bolts 21 serving as guide pins. Thus, the base crosspiece 12 is moved in the Y direction to have its position in the Y direction adjusted.

After the base crosspiece 12 is thus placed on the upper surface 111 of the concrete foundation 11, the bolts 21 each are inserted into holes on reinforcement fittings 22, and the reinforcement fittings 22 are disposed on the inner side of the base crosspiece 12. Then, a nut is screwed into each bolt 21 and fastened, and thus the base crosspiece 12 is secured on the upper surface 111 of the concrete foundation 11.

Then, the arm 13 is coupled to and vertically disposed on the rear end portion 121 of the base crosspiece 12. Here, lower end portions of the side plates 13a are elastically deformed to approach each other to be inserted in and held between the rear end portion inner sides of the side plates 12a of the base crosspiece 12. Thus, the arm 13 is in a self standing state.

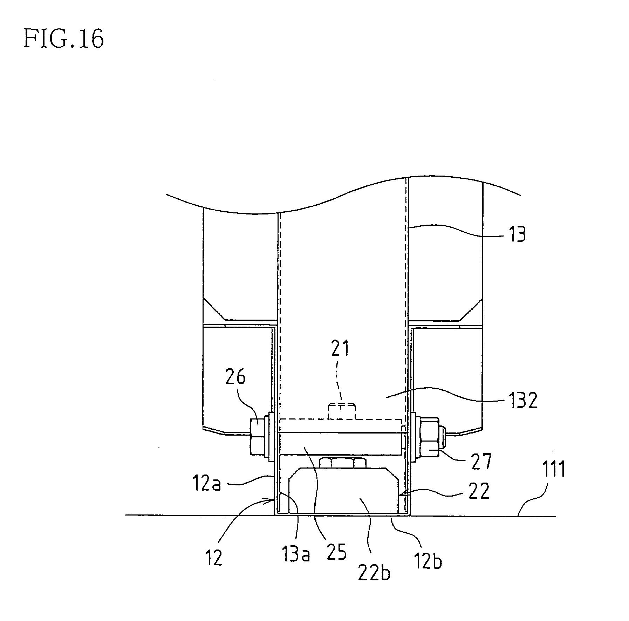

With the arm 13 in the self standing state, as shown in FIG. 16, a pipe 25 is inserted through the side plates 13a of the arm 13, and thus the positions of the pipe 25, the punched holes 13d of the side plates 13a of the arm 13, and the punched holes 12e of the side plates 12a of the base crosspiece 12 are matched. In this state, a bolt 26 is inserted through the pipe 25, the punched holes 13d of the side plates 13a of the arm 13, and the punched holes 12e of the side plates 12a of the base crosspiece 12, and a washer, and then a nut 27 is screwed into a top end of the bolt 26 and fastened. Thus, the lower end portions of the side plates 13a of the arm 13 are coupled to the side plates 12a of the base crosspiece 12.

Next, the vertical crosspiece 14 is secured across the top end portion 122 of the base crosspiece 12 and the upper end portion 131 of the arm 13 in a slanted manner. Top end portions of the side plates 12a of the base crosspiece 12 are elastically deformed to approach each other to be inserted between the top end portion inner sides of the side plates 14a of the vertical crosspiece 14.

In this state, with the same method for coupling the arm 13 and the base crosspiece 12 together as shown in FIG. 16, the top end portions of the side plates 14a of the vertical crosspiece 14 are coupled to the top end portions of the side plates 12a of the base crosspiece 12 using a pipe, a bolt, a washer, and a nut.

Similarly, top end portions 131 of the side plates 13a of the arm 13 are elastically deformed to approach each other to be inserted between the inner sides of the side plates 14a of the vertical crosspiece 14. Then, with the same method for coupling the arm 13 and the base crosspiece 12 together as shown in FIG. 16, the top end portions 131 of the arm 13 are coupled to the side plates 14a of the vertical crosspiece 14 using a pipe, a bolt, a washer, and a nut.

Thus, the triangle structure including the base crosspiece 12, the arm 13, and the vertical crosspiece 14 is established. This triangle structure can sufficiently withstand force both in a vertical direction and a horizontal direction without specifically increasing the piece-part count.

Next, a structure for coupling and securing the crosspiece members 151 and 52 defining the horizontal crosspiece 15 to the vertical crosspiece 14 will be described.

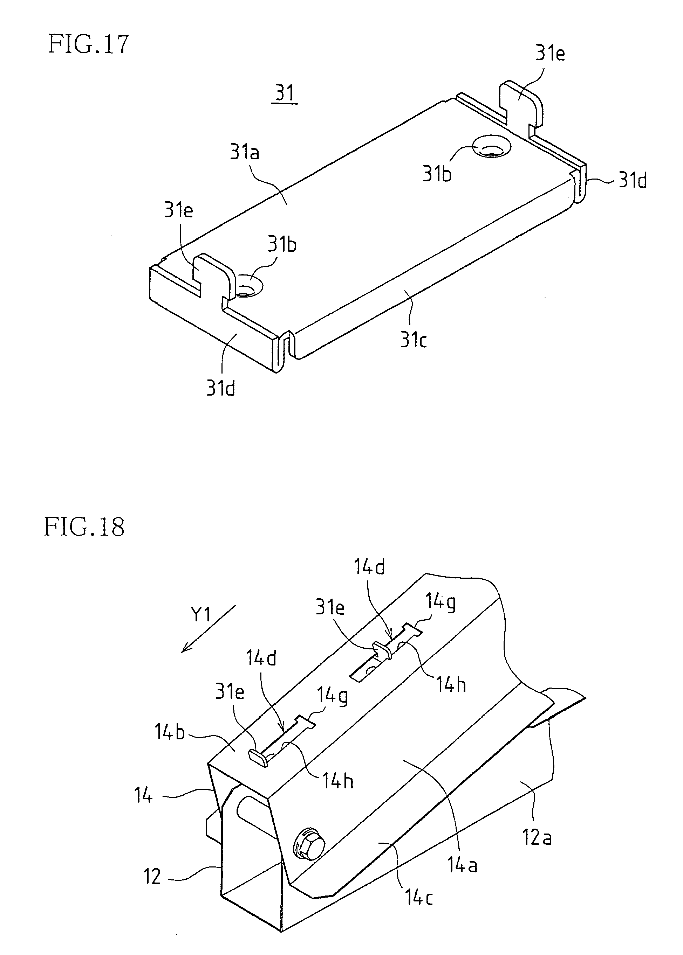

FIG. 17 is a perspective view of an attachment fitting 31 for coupling and securing the crosspiece members 151 and 152 of the horizontal crosspiece 15 to the vertical crosspiece 14. As shown in FIG. 17, the attachment fitting 31 includes a rectangular main plate 31a, side plates 31c bent at both long sides of the main plate 31a, U-shaped side plates 31d double folded at front and rear of the short sides of the main plate 31a, and T-shaped supporting pieces 31e protruding from the respective side plates 31d at the center in the short side direction. The main plate 31a includes two screw holes 31 b.

As shown in FIG. 12 and FIG. 15, the main plate 14b of the vertical crosspiece 14 includes each pair of T-shaped holes 14d disposed along the longitudinal direction at three positions, that is, vicinity of both ends and at the center portion. One attachment fitting 31 is attached for each pair of T-shaped holes 14d. Thus, the attachment fittings 31 are disposed at three positions of the main plate 14b of the vertical crosspiece 14, that is, the vicinity of both ends and at the center portion.

More specifically, as shown in FIG. 18, each supporting piece 31e of the attachment fitting 31 has a head portion stretched out to form a T shape. The head portion is inserted into a slit 14g of each T-shaped hole 14d formed in the main plate 14b of the vertical crosspiece 14 from a downward direction. In this state, each supporting piece 31e is moved toward the top end portion side of an engagement hole 14h of each T-shaped hole 14d (moved in a Y1 direction in FIG. 17). Then, the head portion of each supporting piece 31e is hooked in the engagement hole 14h of each T-shaped hole 14d. Accordingly, the attachment fitting 31 is attached to the main plate 14b of the vertical crosspiece 14.

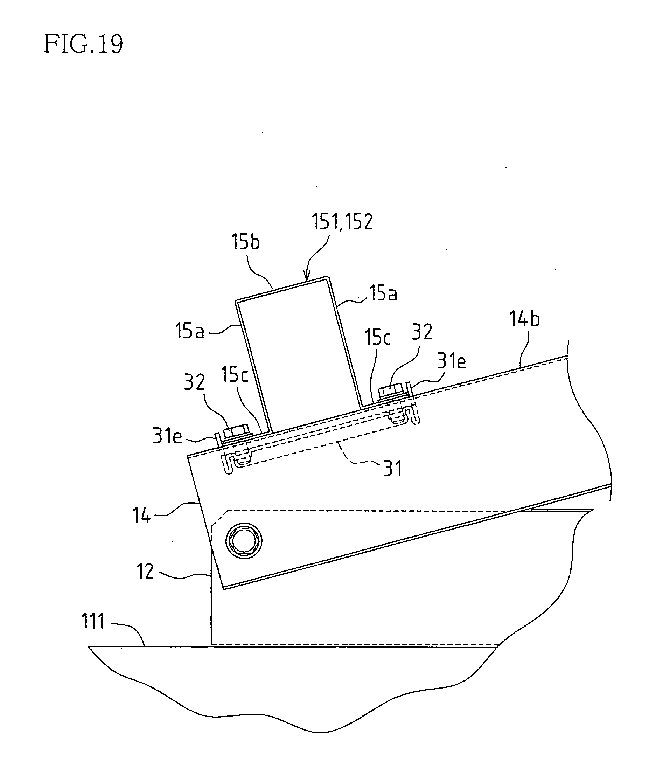

Next, as shown in FIG. 1 and FIG. 19, the crosspiece members 151 and 152 are placed on the main plate 14b of the vertical crosspiece 14 in such a manner as to cross the vertical crosspiece 14 at right angles, and the flanges 15c of the crosspiece members 151 and 152 are disposed between the head portions of the supporting pieces 31e of the attachment fitting 31. The elongated hole 15g of each flange 15c of the crosspiece members 151 and 152 is lapped over each screw hole 31b of the attachment fitting 31 with each T-shaped hole 14d of the main plate 14b of the vertical crosspiece 14 interposed therebetween. Each bolt 32 is screwed for temporal joint into each screw hole 31b of the attachment fitting 31 through the elongated hole 15g of each flange 15c of the crosspiece members 151 and 152 and each T-shaped hole 14d of the main plate 14b of the vertical crosspiece 14.

In this temporally jointed state, each bolt 32 can move along the elongated hole 15g of each flange 15c of the crosspiece members 151 and 152. Thus, the crosspiece members 151 and 152 are moved along the elongated holes 15g (moved in the X direction in FIG. 1) to have their positions in the X direction adjusted.

The attachment fitting 31 can move along each T-shaped hole 14d in the main plate 14b of the vertical crosspiece 14 (along the longitudinal direction of the vertical crosspiece 14). The crosspiece members 151 and 152 can move together with the attachment fitting 31. The intervals among three horizontal crosspieces 15 disposed on the vertical crosspiece 14 are adjusted through the movement of the crosspiece members 151 and 152 along the longitudinal direction of the vertical crosspiece 14.

The positions of three horizontal crosspieces 15 in the X direction (left-right direction) and the intervals among the horizontal crosspieces 15 are thus adjusted. Then, each bolt 32 of the attachment fitting 31 is fastened and thus, the horizontal crosspieces 15 are secured on the vertical crosspiece 14.

Next, coupling structure between the plurality of crosspiece members 151 and 152 defining the horizontal crosspiece 15 will be described.

The crosspiece member 151 shown in FIG. 13 is the rightmost first crosspiece member of the horizontal crosspiece 15 shown in FIG. 1, disposed across the vertical crosspieces 14 on the respective first and second concrete foundations 11 shown in FIG. 1, and secured on the vertical crosspieces 14 using the attachment fittings 31.

The crosspiece member 152 shown in FIG. 14 is one of second and after crosspiece members of the horizontal crosspiece 15 shown in FIG. 1, and is disposed across the left side end portion of the one before crosspiece member and the next vertical crosspiece 14. For example, the second crosspiece member 152 is disposed across the left side end portion of the first crosspiece member 151 and the third vertical crosspiece 14. The third crosspiece member 152 is disposed across the left side end portion of the second crosspiece member 152 and the fourth vertical crosspiece 14. The nth crosspiece member 152 is disposed across the left side end portion of the (n-1)th crosspiece member 152 and the (n+1)th vertical crosspiece 14. The second and after crosspiece members 152 are also secured to the corresponding vertical crosspieces 14 using the attachment fittings 31.

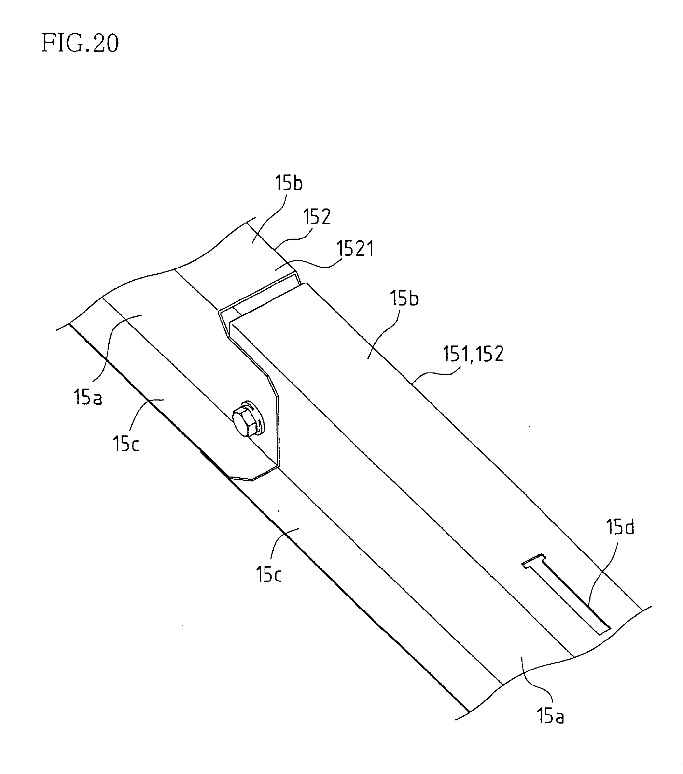

Then, as shown in FIG. 20, the left side end portions of the side plates 15a of the first crosspiece member 151 are inserted in and held between the inner sides of one end portions 1521 of the side plates 15a of the second crosspiece member 152. Then, with the same method for coupling the arm 13 and the base crosspiece 12 together shown in FIG. 16, the side plates 15a of the second crosspiece member 152 are coupled to the side plates 15a of the first crosspiece member 151 using a pipe, a bolt, a washer, and a nut.

Similarly, the left side end portions of the side plates 15a of the (n-1)th crosspiece member 152 are inserted in and held between the inner sides of one end portions of the side plates 15a of the nth crosspiece member 152. Then, with the same method for coupling the arm 13 and the base crosspiece 12 together shown in FIG. 16, the nth side plates 15a are coupled to the (n-1)th side plates 15a using a pipe, a bolt, a washer, and a nut.

The plurality of crosspiece members 151 and 152 are thus coupled to form the one long horizontal crosspiece 15.

Next, the guide support 17 for coupling and securing the protruding end portions (engagement portions 19e) of the supporting members 19 of the solar cell module 16 to the horizontal crosspieces 15 will be described.

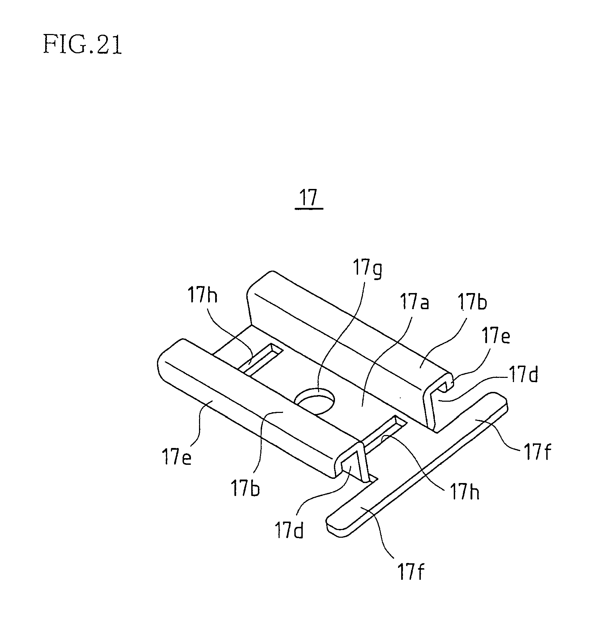

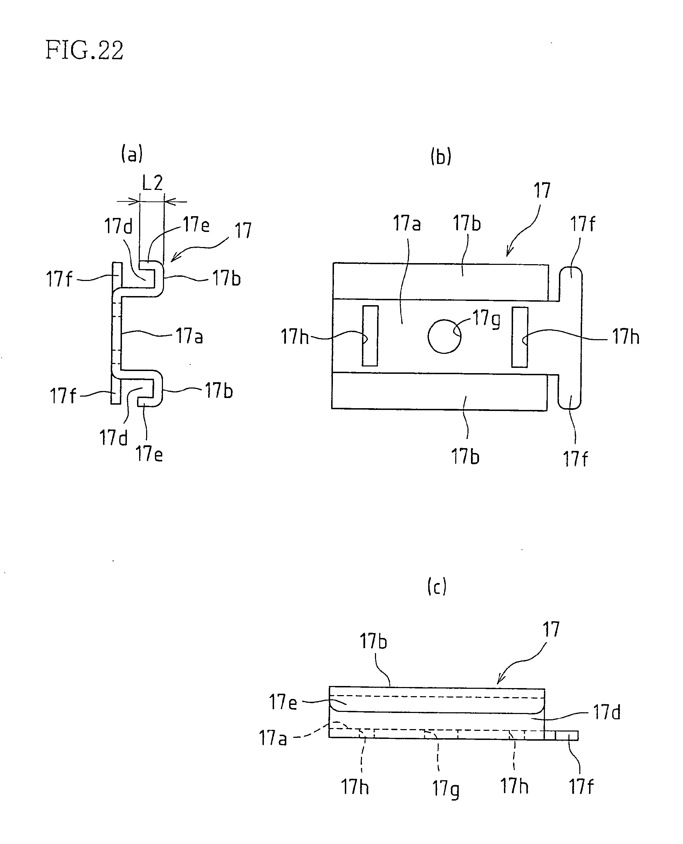

FIG. 21 is a perspective view of the guide support 17. FIGs. 22A, 22B, and 22C are respectively a front view, a plan view, and a side view of the guide support 17. As shown in FIG. 21 and FIGs. 22A, 22B, and 22C, the guide support 17 includes a rectangular main plate 17a, and side portions 17b formed by bending both side portions of the long direction of the main plate 17a upwardly, outwardly, and downwardly in this order. An inner side of the side portion 17b is a fitting groove 17d, and downwardly bent side portion defining the fitting groove 17d is a hooking portion 17e. Each fitting groove 17d has one end side of the long direction opened and a stopper 17f disposed at the other end side. The stoppers 17f are formed by extending the one end portion of the long direction of the main plate 17a along the fitting groove 17d and further extending both sides of the extended portion of the main plate 17a in directions orthogonal to the fitting groove 17d. Furthermore, the main plate 17a includes a punched hole 17g at the center portion and slits 17h on both sides of the punched hole 17g.

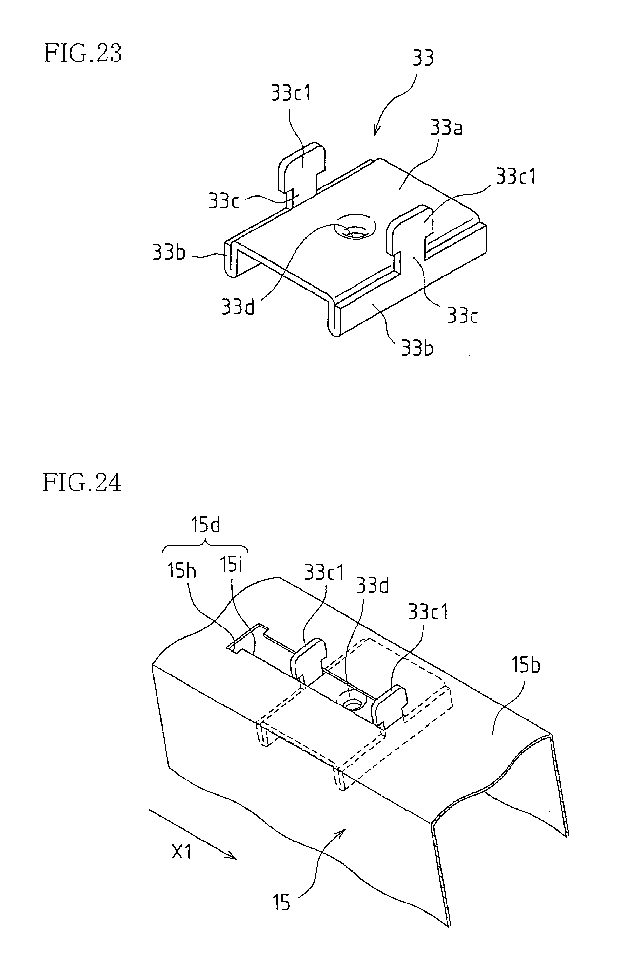

FIG. 23 is a perspective view of an attachment fitting 33 used for securing the guide support 17 to the horizontal crosspiece 15. As shown in FIG. 23, the attachment fitting 33 includes an approximately rectangular main plate 33a, U-shaped side plates 33b double folded at both sides of the main plate 33a, and T-shaped supporting pieces 33c protruding from the respective side plates 33b at a center portion in the longitudinal direction. The main plate 33a includes a screw hole 33d at a center portion.

As shown in FIG. 13 and FIG. 14, the main plate 15b of each of the crosspiece members 151 and 152 to be the horizontal crosspiece 15 includes the T-shaped holes 15d at six positions along the longitudinal direction. The attachment fitting 31 is attached to each T-shaped hole 15d in the main plate 15b.

As shown in FIG. 24, head portions 33c1 of the supporting pieces 33c of the attachment fitting 33 are sequentially inserted into the slit 15h of the T-shaped hole 15d of the main plate 15b of the horizontal crosspiece 15 from downward direction, and the support pieces 33c are moved toward an engagement hole 15i of the T-shaped hole 15d (moved in the X1 direction of in FIG. 23), so that the head portions 33c1 of the support pieces 33c are hooked in the engagement hole 15i of the T-shaped hole 15d. Thus, the attachment fitting 33 is attached to the main plate 15b of the horizontal crosspiece 15.

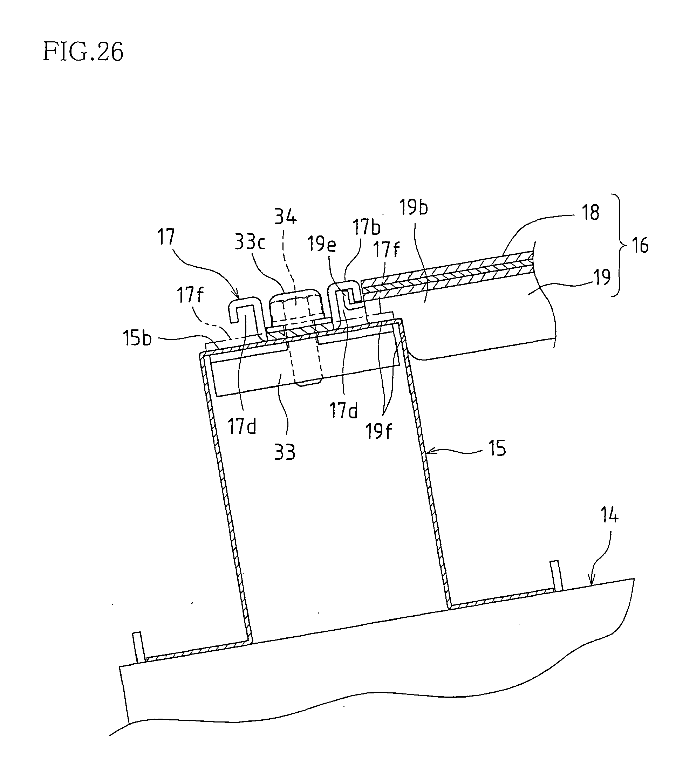

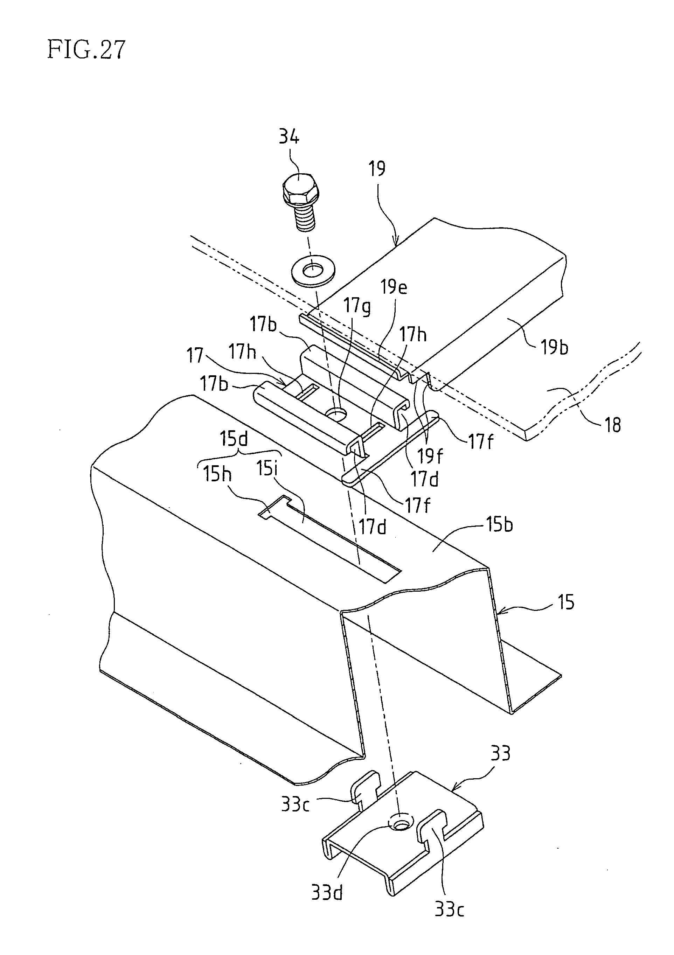

FIG. 25 and FIG. 26 are respectively a perspective view and a cross-sectional view of a securing structure of the guide support 17 using the attachment fitting 33. FIG. 27 is an exploded cross-sectional view of the securing structure of the guide support 17 using the attachment fitting 33.

As shown in FIG. 25, Fig. 26, and FIG. 27, the head portions 33c1 of the supporting pieces 33c of the attachment fitting 33 are hooked in the T-shaped hole 15d of the main plate 15b of the horizontal crosspiece 15 so as to protrude from the main plate 15b of the horizontal crosspiece 15. The head portions 33c1 of the supporting pieces 33c are inserted in the respective slits 17h of the guide support 17, and thus the guide support 17 is disposed on the main plate 15b of the horizontal crosspiece 15. The punched hole 17g of the guide support 17 is lapped over the screw hole 33d of the attachment fitting 33 with the T-shaped hole 15d of the horizontal crosspiece 15 interposed therebetween. A bolt 34 is screwed into the screw hole 33d of the attachment fitting 33 through the punched hole 17g of the guide support 17 and the T-shaped hole 15d of the horizontal crosspiece 15, and fastened. Thus, the guide support 17 is secured on the main plate 15b of the horizontal crosspiece 15.

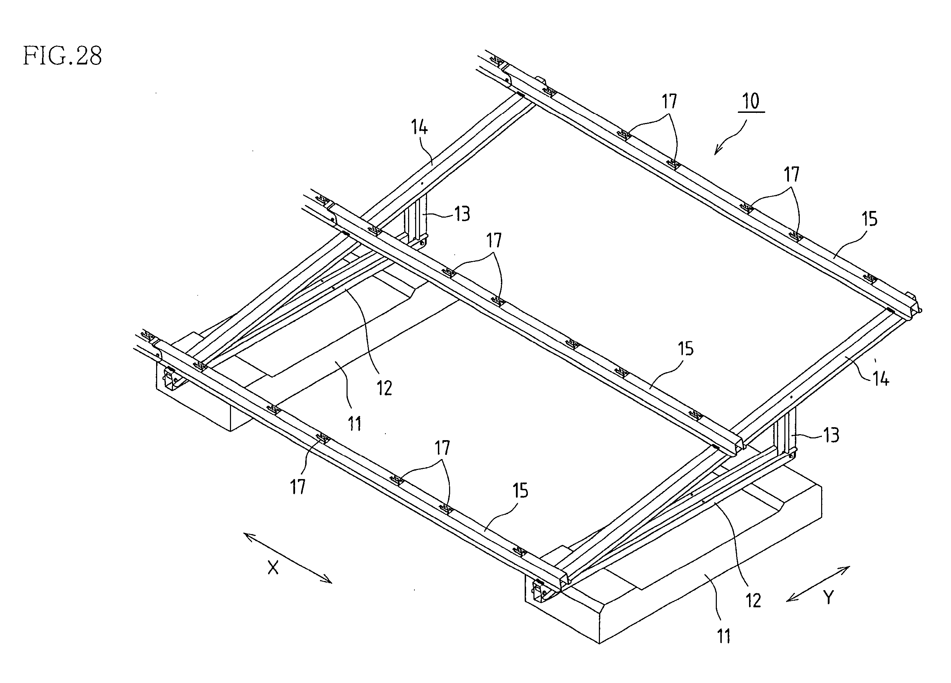

Thus, the concrete foundations 11, the base crosspieces 12, the arms 13, the vertical crosspieces 14, the horizontal crosspieces 15 and the guide supports 17 are assembled into the main structure of the attachment stand 10 as shown in FIG. 28. In FIG. 28, the concrete foundations 11 are laid and the triangle structure including the base crosspiece 12, the arm 13, and the vertical crosspiece 14 is formed on each concrete foundation 11. Three horizontal crosspieces 15 are disposed across each of the vertical crosspieces 14, and the plurality of guide supports 17 are secured on each of the horizontal crosspieces 15 at intervals.

Next, how the solar cell module 16 is supported on the horizontal crosspiece 15 by the guide support 17 will be described.

As clearly seen from FIG. 25 and FIG. 26, the fitting grooves 17d on both sides of the guide support 17 are parallel to the horizontal crosspiece 15, and a gap is formed between the hooking portion 17e (see FIG. 21) of each fitting groove 17d and the main plate 15b of the horizontal crosspiece 15. The engagement portion 19e of the supporting member 19 of the solar cell module 16 enters the fitting groove 17d through the gap between the hooking portion 17e of the fitting groove 17d and the main plate 15b of the horizontal crosspiece 15. Thus, the engagement portion 19e of the supporting member 19 fits in (engages with) the fitting groove 17d.

The side plate 19b of the supporting member 19 contacts the stopper 17f of the guide support 17, and the contact portion 19f of the supporting member 19 contacts the main plate 15b and the side plate 15a of the horizontal crosspiece 15 (comer portion of the horizontal crosspiece 15).

The engagement portion 19e of the supporting member 19 fits in the fitting groove 17d of the guide support 17 as described above, and thus the end portion along the longitudinal direction of the supporting member 19 is supported. Accordingly, the end portion of the solar cell module 16 is supported on the main plate 15b of the horizontal crosspiece 15. Here, the side plate 19b of the supporting member 19 contacts the stopper 17f of the guide support 17, and the contact portion 19f of the supporting member 19 contacts the corner portion of the horizontal crosspiece 15, and thus the solar cell module 16 is positioned.

Specifically, with the contact portion 19f of the side plate 19b of the supporting member 19 contacting two respective sides of the main plate 15a and the side plate 15b as the corner portion of the horizontal crosspiece 15 in a fitting manner, the movement of the supporting member 19 in the longitudinal direction (the Y direction in FIG. 1) can be surely restricted. With the engagement portion 19e of the supporting member 19 fitting in the fitting groove 17d of the guide support 17, the movement in the direction perpendicular to the placement surface of the attachment panel 10 can be restricted.

Additionally, with the side plate 19b of the supporting member 19 contacting the stopper 17f of the guide support 17, the supporting member 19 is prevented from sliding (sliding in the X direction in FIG. 1), and thus the solar cell module 16 can be also prevented from sliding.

As shown in FIG. 1 and FIG. 28, the disposed positions of the guide supports 17 are the same on each horizontal crosspiece 15. Specifically, the first guide supports 17 on the respective horizontal crosspieces 15 are aligned in a straight line in the Y direction, the second guide supports 17 on the respective horizontal crosspieces 15 are aligned in a straight line in the Y direction, and nth guide supports 17 thereafter on the respective horizontal crosspieces 15 are aligned in a straight line in the Y direction. A pitch between the first and second guide supports 17 is set to be the same as a pitch between the two supporting members 19 of the solar cell module 16, a pitch between the third and the fourth guide supports 17 is set to be the same as a pitch between the two supporting members 19 of the solar cell module 16, and similarly, a pitch between an odd number and an even number guide supports 17 thereafter is set to be the same as a pitch between the two supporting members 19 of the solar cell module 16. Accordingly, the guide supports 17 on each horizontal crosspiece 15 are positioned in such a manner that an odd number and an even number guide supports 17 can support ends of two supporting members 19 of the solar cell module 16.

Moreover, a pitch between the second and third guide supports 17, as well as a pitch between the fourth and fifth guide supports 17, that is, a pitch between the odd number and even number guide supports 17 is set to be approximately the same or slightly larger than a pitch between the support members 19 of the respective two solar cell modules 16 adjoiningly disposed. Thus, the solar cell modules 16 can be arranged next to each other with almost no gap between each two adjoiningly disposed solar cell modules 16.

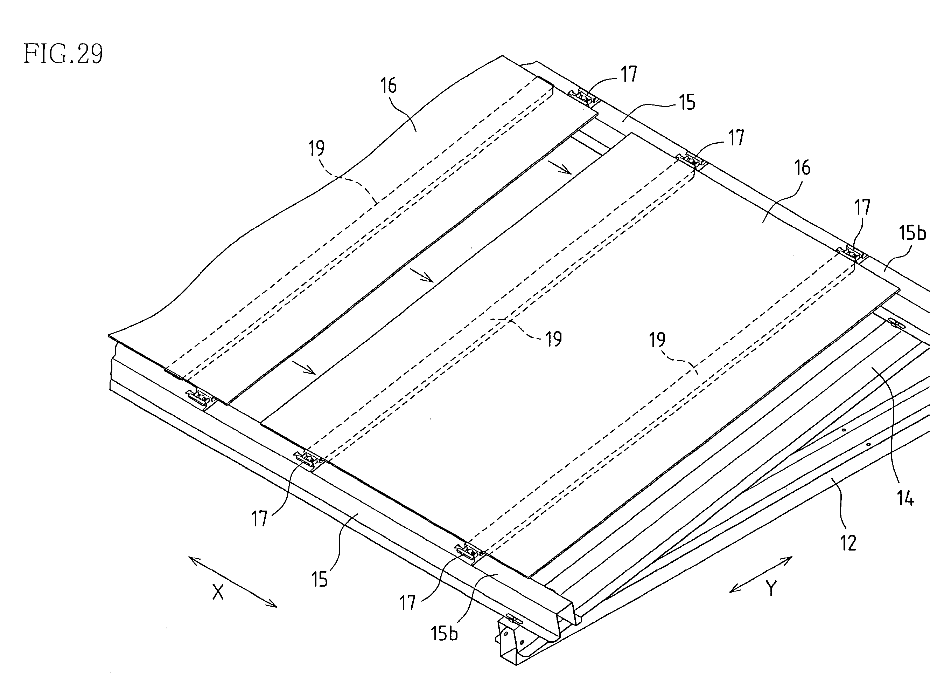

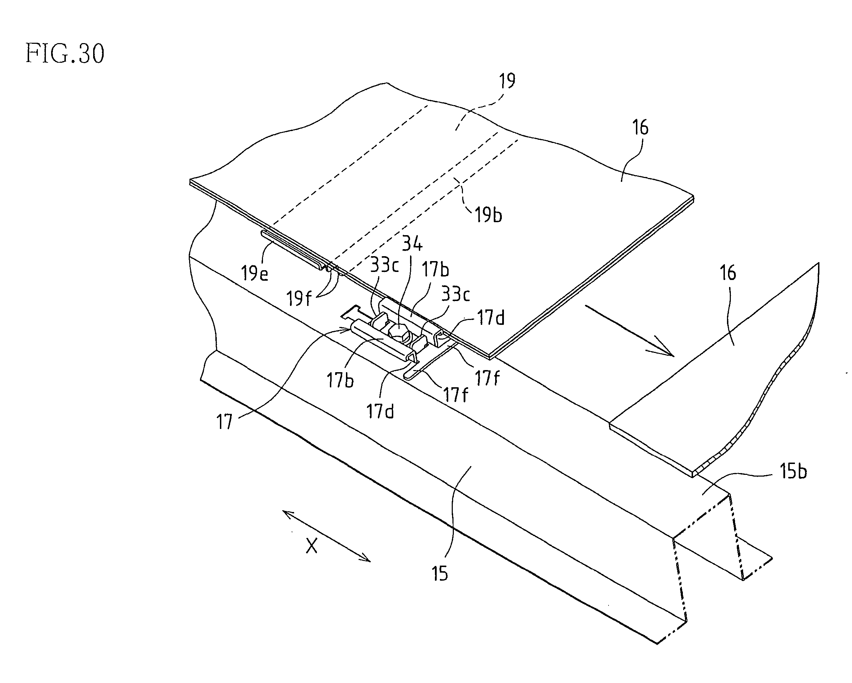

The engagement portion 19e of the supporting member 19 is inserted into the fitting groove 17d of the guide support 17 as follows. As shown in FIG. 29 and FIG. 30, the protruding end portion of the supporting member 19 of the solar cell module 16 is placed on the main plate 15b of the horizontal crosspiece 15 while being shifted in the horizontal direction (X direction) from the guide support 17 of the horizontal crosspiece 15. As shown in FIG. 26, the contact portion 19f of the supporting member 19 is brought in contact with the main plate 15b and the side plate 15a (comer portion of the horizontal crosspiece 15) of the horizontal crosspiece 15. With this contact, the engagement portion 19e of the supporting member 19 is positioned with respect to the corner portion of the horizontal crosspiece 15. Thus, the engagement portion 19e of the supporting member 19 is lapped over the fitting groove 17d of the guide support 17 when viewed in the X direction.

In this state, as shown in FIG. 29 and FIG. 30, the solar cell module 16 is slid in the X direction (toward the right in the figure) to make the contact portion 19f of the supporting member 19 slide along the main plate 15b and the side plate 15a of the horizontal crosspiece 15. Thus, the engagement portion 19e of the supporting member 19 enters the opened end of the fitting groove 17d of the guide support 17 and thus, the engagement portion 19e of the supporting member 19 fits in the fitting groove 17d of the guide support 17. Then, by further sliding the solar cell module 16 in the X direction (toward the right in the figure), the engagement portion 19e of the supporting member 19 contacts the stopper 17f disposed at the other end of the fitting groove 17d of the guide support 17.

Thus, an end of the solar cell module 16 is supported on the main plate 15b of the horizontal crosspiece 15. The side plate 19b of the supporting member 19 contacts the stopper 17f of the guide support 17, and the contact portion 19f of the supporting member 19 contacts the corner portion of the horizontal crosspiece 15, and thus the solar cell module 16 is positioned. Moreover, with the side plate 19b of the supporting member 19 in contact with the stopper 17f of the guide support 17, the supporting member 19 is prevented from sliding (sliding in a descending order direction of the alignment of the solar cell modules 16), and the solar cell module 16 is also prevented from sliding in the descending order direction.

Regarding the lower horizontal crosspiece 15 and the center horizontal crosspiece 15 shown in FIG. 1, both end portions of the supporting members 19 of the rightmost first solar cell module 16 are placed on the horizontal crosspieces 15 while being shifted from the first and the second guide supports 17 of the horizontal crosspieces 15. Here, the solar cell module 16 brings the contact portions 19f of the supporting members 19 at the downward side in the slanting direction of the solar cell module 16 in contact with the corner portion of the lower horizontal crosspiece 15 by the solar cell module 16's own weight. With this contact, the engagement portions 19e of the supporting members 19 at the downward side in the slanting direction are lapped over the fitting grooves 17d of the guide supports 17 of the lower horizontal crosspiece 15 when viewed in the X direction.

The intervals among the horizontal crosspieces 15 are adjusted in advance so that the distance between the fitting grooves 17d of the guide supports 17 on the respective horizontal crosspieces 15 is the same as the distance between the engagement portions 19e of both end portions of the supporting member 19. This adjustment can be carried out when securing the horizontal crosspieces 15 with the attachment fittings 31 as described above. Here, when the contact portions 19f of the supporting members 19 at the downward side of the slanting direction of the solar cell module 16 are in contact with the corner portion of the lower horizontal crosspiece 15, the engagement portions 19e of the supporting members 19 at the other end of the supporting member 19 on the upward side in the inclination direction are also lapped over the fitting grooves 17d of the guide supports 17 of the center horizontal crosspiece 15 as viewed in the X direction.

In this state, as shown in FIG. 29 and FIG. 30, the solar cell module 16 is slid in the X direction, and the engagement portions 19e at both ends of each supporting members 19 are inserted and fit into the fitting grooves 17d of the guide supports 17 of the horizontal crosspieces 15 to be in contact with the stoppers 17f. Thus, both end portion of the solar cell module 16 are supported across the horizontal crosspieces 15.

In this sliding of the solar cell module 16, as shown in FIG. 26, the contact portions 19f of the supporting members 19 at the downward side in the slanting direction of the solar cell module 16 are still in contact with the corner portion of the lower horizontal crosspiece 15. Thus, downward and horizontal movements of the contact portion 19f of each supporting member 19 are restricted, and thus the solar cell module 16 does not slide off downward in the slanting direction by the own weight. Accordingly, the safety of the work is secured.

As clearly seen from FIG. 26, a tolerance is set between the engagement portion 19e of the supporting member 19 and the fitting groove 17d of the guide support 17. Thus, a slight misalignment of the engagement portion 19e of the supporting member 19 with respect to the fitting groove 17d of the guide support 17 is not a problem. With this tolerance set, even when the length of the supporting member 19 changes due to the thermal expansion or contraction, such a change can be tolerated.

Subsequently, with similar procedures, the engagement portions 19e on both ends of the supporting members 19 of the second solar cell module 16 are inserted and fit in the fitting grooves 17d of the guide supports 17 of the horizontal crosspieces 15 to be in contact with the stoppers 17f. Thus, both end portions of the solar cell module 16 are supported on the horizontal crosspieces 15. Similarly, the third, fourth, ... solar cell modules 16 thereafter are supported across the horizontal crosspieces 15. Thus, the solar cell modules 16 of the lower first row are arranged next to each other between the lower horizontal crosspiece 15 and the center horizontal crosspiece 15.

Regarding the center horizontal crosspiece 15 and the upper horizontal crosspiece 15 shown in FIG. 1, similarly, the rightmost first solar cell module 16 is slid in the X direction with the both end portions of the supporting members 19 placed on the main plates 15b of the horizontal crosspieces 15. Thus, the engagement portions 19e on both ends of the supporting members 19 of the solar cell module 16 fit in the fitting grooves 17d of the guide support 17 of the horizontal crosspieces 15. Accordingly, the both end portions of the solar cell module 16 are supported across the horizontal crosspieces 15. Similarly, the second, the third, ... solar cell modules 16 are sequentially supported across the horizontal crosspieces 15 with the similar procedures. Thus, the solar cell modules 16 of the upper second row are arranged next to each other between the center horizontal crosspiece 15 and the upper horizontal crosspiece 15.

Here, the guide supports 17 of the center horizontal crosspiece 15 support both solar cell modules 16 of the lower first row and the solar cell modules 16 of the upper second row. The fitting grooves 17d on one side and the fitting grooves 17d on the other side of the guide supports 17 respectively face the solar cell modules 16 of the lower first row and the solar cell modules 16 of the upper second row. The engagement portions 19e on the ends on the upward side of the slanting direction of the supporting members 19 of the lower first row fit in the fitting grooves 17d on one side of the guide supports 17, while the engagement portions 19e on the ends on the downward side of the slanting direction of the supporting members 19 of the upper second row fit in the fitting grooves 17d on the other side of the guide supports 17.

In both lower first row and the upper second row, a pitch between the odd number and even number guide supports 17 is set to be approximately the same or slightly larger than a pitch between the support members 19 of the respective two adjoiningly disposed solar cell modules 16. Thus, the solar cell modules 16 are arranged next to each other with almost no gap between each two adjoiningly disposed solar cell modules 16.

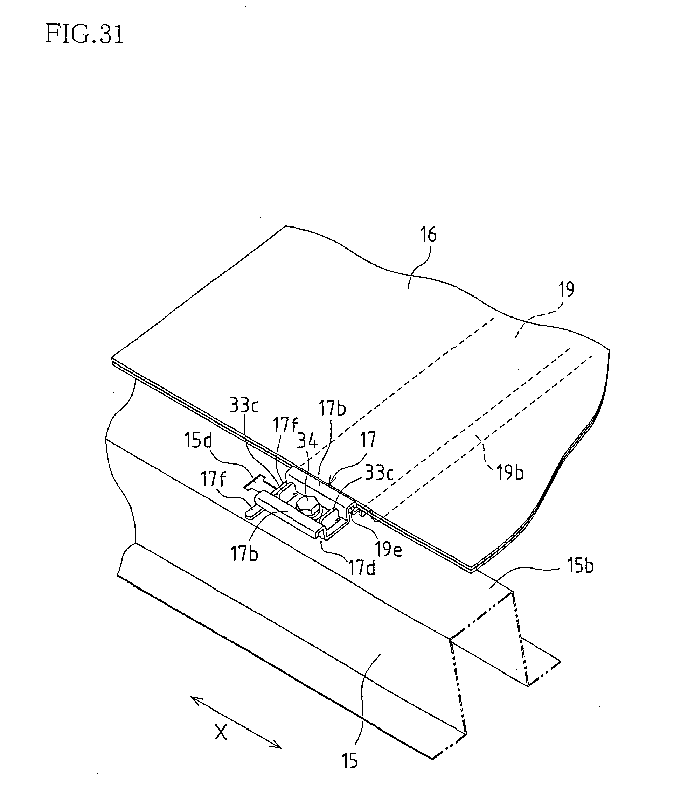

For a final solar cell module 16, as shown in FIG. 31, the final guide support 17 on the horizontal crosspiece 15 is temporarily detached to be flipped left-to-right and then is secured again on the horizontal crosspiece 15. Then, the engagement portion 19e of the supporting member 19 fits in the fitting groove 17d of the guide support 17 so that the end portion of the supporting member 19 is supported. Here also, the side plate 19b of the supporting member 19 is brought in contact with the stopper 17f of the guide support 17 to prevent the supporting member 19 from sliding. Since the guide support 17 has been flipped left-to-right, the direction in which the sliding is prevented is the ascending order direction of the alignment of the solar cell modules 16. Thus, the final solar cell module 16 is prevented from sliding in the ascending order direction. In each of the horizontal crosspieces 15, the final guide support 17 is flipped left-to-right and then secured, so that the final solar cell module 16 is prevented from sliding in the ascending order direction.

With the final solar cell module 16 prevented from sliding in the ascending order direction, the solar cell modules 16 are prevented from sliding in the ascending order direction because the solar cell modules 16 are arranged to be next to each other without a gap therebetween as described above. Accordingly, none of the solar cell modules 16 can slide in the ascending order direction and thus, the engagement portion 19e of the supporting member 19 cannot be pulled out from the fitting groove 17d of the guide support 17. Therefore, the solar cell modules 16 cannot be detached. It is a matter of course that the solar cell modules 16 cannot slide also in the descending order direction because the stoppers 17f of the guide supports 17 before the final guide support 17 prevents the solar cell modules 16 from sliding in the descending order direction.

Thus, after the plurality of the solar cell modules 16 are disposed across the horizontal crosspieces 15 and arranged next to each other, the final guide supports 17 on the respective horizontal crosspiece 15 are temporarily detached to be flipped left-to-right and then are secured again on the corresponding horizontal crosspieces 15. Then, the ends of the supporting members 19 are supported by the guide supports 17. Accordingly, the final solar cell module 16 is prevented from sliding in the ascending order direction. As a result, the solar cell modules 16 cannot be detached nor slide both in ascending and descending order directions.

In the procedure of fitting the supporting member 19 of the solar cell module 16 into the guide support 17 on the horizontal crosspiece 15 to be supported, the side plate 19b of the supporting member 19 is brought in contact with the stopper 17f of the guide support 17 to prevent the solar cell module 16 from sliding in the descending order direction. However, at this stage (that is, before the final solar cell module 16 is disposed across the horizontal crosspieces 15), the solar cell modules 16 can slide in the ascending order direction. Specifically, when the solar cell module 16 slides in the ascending order direction, the engagement portions 19e of the supporting members 19 that have been fit might be pulled out from the fitting grooves 17d of the guide supports 17.

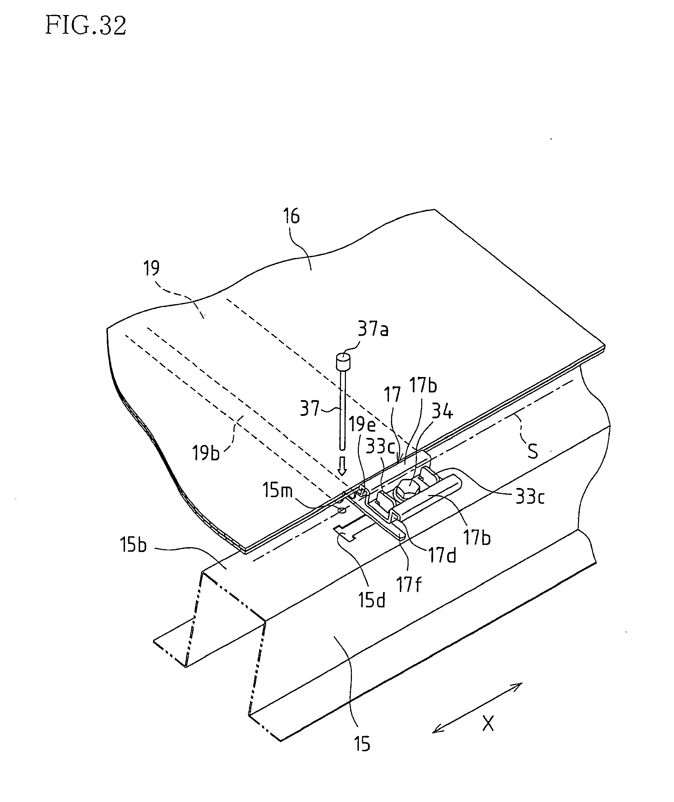

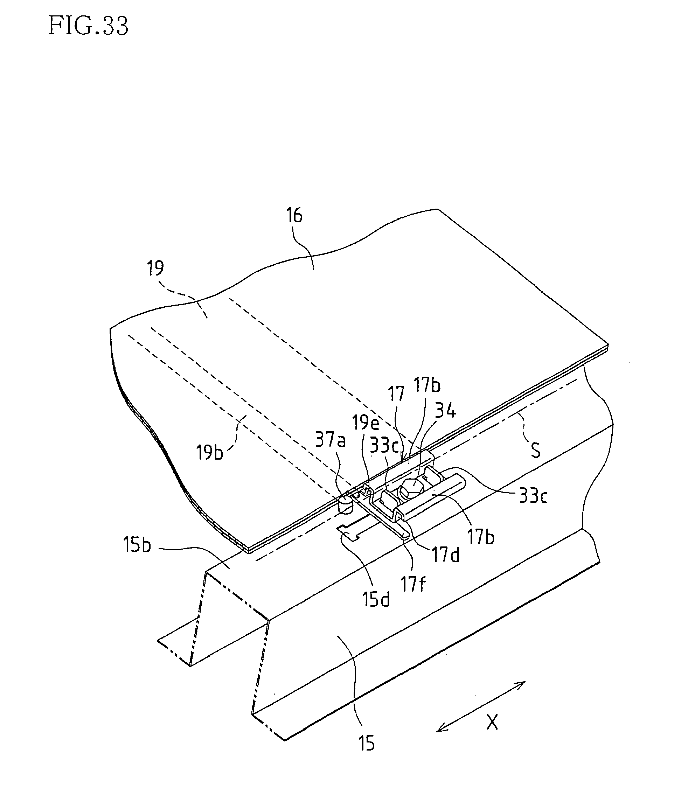

Thus, as shown in FIG. 32 and FIG. 33, the main plate 15d includes a pin insertion hole 15m adjacent to a position at which the slit 15h of the T-shaped hole 15d is formed to prevent the solar cell module 16 from sliding in the ascending order direction (toward the left in the figure), so that the engagement portion 19e of the supporting member 19 that has been fit is not pulled out from the fitting groove 17d of the guide supports 17. A retaining pin 37 is inserted in the pin insertion hole 15m when the side plate 19b of the supporting member 19 is in contact with stopper 17f of the fitting grooves 17d as a result of fitting the engagement portion 19e of the supporting member 19 of the solar cell module 16 in the fitting groove 17d of the guide support 17 and then further sliding the engagement portion 19e in the descending order direction (toward the right in the figure).

On the main plate 15b of the horizontal crosspiece 15, the pin insertion hole 15m is disposed on a slide line S on which the engagement portion 19e of the supporting member 19 slides in the X direction on the main plate 15b of the horizontal crosspiece 15. Thus, by inserting the retaining pin 37 in the pin insertion hole 15m, a head portion 37a of the pin 37 prevents the engagement portion 19e of the supporting member 19 from sliding in the ascending order direction, whereby the engagement portion 19e of the supporting member 19 that has been fit can be prevented from being pulled out from the fitting groove 17d of the guide support 17. Thus, the solar cell modules 16 disposed across the horizontal crosspieces 15 and arranged next to each other can be individually prevented from sliding in the ascending direction and the descending direction after the installation. Thus, even when the horizontal crosspiece 15 is slightly slanted toward the horizontal direction for example, the solar cell modules 16 disposed across the horizontal crosspieces 15 and arranged next to each other can be individually prevented from sliding in the ascending direction and the descending direction after the installation, and thus the installation work can be smoothly carried out. After the final solar cell module 16 is installed, all the solar cell modules 16 are prevented from sliding in both ascending direction and descending direction as described above. Thus, the pins 37 may be pulled out from the pin insertion holes 15m at this stage. It is to be noted that, for facilitating the work in the later stage, the pin 37 having a simple screw structure may be screwed to be secured or simply inserted in the pin insertion hole 15m.

The guide support 17, which is secured to the horizontal crosspiece 15 with the attachment fitting 33 and the bolt 34, can be detached by pulling out the bolt 34. The solar cell module 16 can be detached by detaching four guide supports 17 supporting both end portions of the supporting members 19 of the solar cell module 16. Thus, when there is a desired solar cell module 16 that needs to be maintained or replaced, only the desired solar cell module 16 can be detached. Here, if the pins 37 are inserted into the pin insertion holes 15m, the adjoining solar cell modules 16 do not slide, and thus the maintenance and the replacing can be carried out smoothly.

As described above, in this embodiment, the plurality of solar cell modules 16 can be disposed across the horizontal crosspieces 15 and arranged next to each other by repeating the operation of disposing each solar cell module 16 across the horizontal crosspieces 15 and sliding the solar cell module 16 to make the engagement portions 19e on both ends of the supporting members 19 inserted and fit into the fitting grooves 17d of the guide supports 17 on the horizontal crosspieces 15 to be in contact with the stoppers 17f.

The contact portions 19f of the supporting members 19 at the downward side in the slanting direction of the solar cell module 16 are in contact with the corner portion of the lower horizontal crosspiece 15. Thus, the solar cell module 16 does not slip off, and thus the safety of the work is secured.

If the guide supports 17 are secured on the horizontal crosspieces 15 before the factory shipment, almost no tool needs to be used for installing the solar cell modules 16 across the horizontal crosspieces 15. Thus, the work efficiency can be improved.

Furthermore, the fitting grooves 17d are disposed on both sides of the guide support 17. Thus, guide supports 17 on the center horizontal crosspiece 15 can support both the solar cell module 16 of the lower first row and the solar cell module 16 of the upper second row. Furthermore, the fitting grooves 17d respectively include the stoppers 17f. Thus, when the guide support 17 is flipped left-to-right and again secured on the horizontal crosspiece 15, the direction in which the solar cell module 16 is prevented from sliding by the stopper 17f of the guide support 17 can be reversed.

Furthermore, even when the solar cell modules 16 are arranged next to each other with no gap therebetween, the desired solar cell module 16 can be detached by detaching the guide supports 17. Thus, the desired solar cell module 16 can be easily maintained or replaced.

Regarding the horizontal crosspiece 15 only, as is clearly seen from FIG. 26, the main plate 15b of the horizontal crosspiece 15 includes the T-shaped hole 15d of the horizontal crosspiece 15 on the center line in the longitudinal direction, and the guide support 17 is secured on the center line of the main plate 15b of the horizontal crosspiece 15. Thus, when the load of wind pressure and snow acts on the solar cell module 16, the force due to the load of the wind pressure and snow acts on the center line of the horizontal crosspiece 15 while hardly deviating. This improves the load bearing of the horizontal crosspiece 15.

If the force due to the load of the wind pressure and snow acts on a portion deviated from the center line of the horizontal crosspiece 15, large twisting force acts on the horizontal crosspiece 15. This degrades the strength of the horizontal crosspiece 15.

It is to be noted that, more strictly, the force due to the load of the wind pressure and snow does not accurately acts on the center line of the horizontal crosspiece 15. In this embodiment, although the guide support 17 is secured with the bolt 34 on the center line of the horizontal crosspiece 15, the fitting groove 17d (and the engagement portions 19e of the supporting members 19) of the guide supports 17 deviated from the center line of the horizontal crosspiece 15 receives the force due to the load of the wind pressure and snow, and thus the force acts between the fitting grooves 17d (and the engagement portion 19e) and the bolt 34. Thus, the force acts on a portion slightly deviated from the center line of the horizontal crosspiece 15. Accordingly, while the twisting force to the horizontal crosspiece 15 can be suppressed, it does not mean that such force is not generated completely.

Still, in this embodiment, the contact portions 19f formed on both end portions of the supporting members 19 of the solar cell panel 16 contact the corners of the horizontal crosspieces 15. Thus, the contact portions 19f on both end portions of the supporting members 19 suppress the twisting force to the horizontal crosspieces 15. Thus, the supporting members 19 reinforce the horizontal crosspieces 15 or the attachment stand.

Thus, the supporting members 19 are not only components of the solar cell module 16, but also are used as components of the attachment stand. Accordingly, the piece part-count and the cost of the photovoltaic power generating system can be largely reduced.

The strength of the solar cell panel 18 is proportional to its area and is approximately equivalent to the strength of a thin glass plate. Thus, a possible case where the solar cell panel 18 receives the force due to the load of the wind pressure and snow to be bent and cracked needs to be prevented.

Conventionally, a solar cell module has been made by disposing a frame surrounding four sides of a solar cell panel, and the solar cell panel has been prevented from being bent or cracked with the resistance of the frame. In a solar cell module of a type without the frame, each solar cell panel has had a small area to reduce the bending force to act on the solar cell panel.

In contrast, in this embodiment, two supporting members 19 exert resistance against the force to bend the solar cell panel 18 about a virtual axis in the X direction (shown in FIG. 1). The horizontal crosspieces 15 supporting both ends of two supporting members 19 exert resistance against the force to bend the solar cell panel 18 about a virtual axis in the Y direction (shown in FIG. 1). This prevents the solar cell panel 18 from being largely bent and cracked.

Thus, the supporting members 19 are not only components of the solar cell module 16 but also are partly in charge of the function of the attachment stand on which the solar cell module 16 is installed.

As described above, the supporting members 19 suppress the twisting force to the horizontal crosspieces 15 with the contact portions 19f at the both end portions in contact with the corners on the horizontal crosspieces 15, and corporate with the horizontal crosspieces 15 to prevent the solar cell panel 18 from bending and cracking. Thus, the supporting members 19 are not only components of the solar cell module 16 but also are components of the attachment stand.

Thus, in this embodiment, compared with the conventional solar cell module and an attachment stand thereof, the parts having the same functions in the photovoltaic power generating system can be reduced, and thus the piece-part count and the cost of the photovoltaic power generating system can be largely reduced.

In this embodiment, both end portions of the supporting members 19 of the solar cell module 16 are supported across the horizontal crosspieces 15. Furthermore, the solar cell modules 16 of the upper row and the solar cell modules 16 of the lower row can be respectively supported on upper and lower sides of the center horizontal crosspiece 15. Thus, the number of horizontal crosspieces 15 can be equal to or less than the number of rows of the solar cell modules 16. Accordingly, the piece-part count, the number of installation steps, and the cost of the photovoltaic power generating system can be further reduced.

The height of the engagement portion 19e of the supporting member 19 (height L1 in FIG. 6B and FIG. 8B) and the height of the hooking portion 17e of the fitting groove 17d of the guide support 17 (height L2 in FIG. 22A) are set to be low. Thus, even when the force to pull the engagement portion 19e of the supporting member 19 out of the fitting groove 17d of the guide support 17 is received, neither of the engagement portion 19e and the hooking portion 17e are likely to deform to be laid down. Thus, the supporting strength between the engagement portion 19e of the supporting member 19 and the fitting groove 17d of the guide support 17 is high.

The preferred embodiment of the present invention has been described with reference to the accompanying drawings. However, it is a matter of course that the present invention is not limited to the embodiment. It is apparent to the person skilled in the art that various modifications or corrections can be derived without departing from the scope of claims. It is a matter of course that such modifications and corrections fall under the technical scope of the present invention.

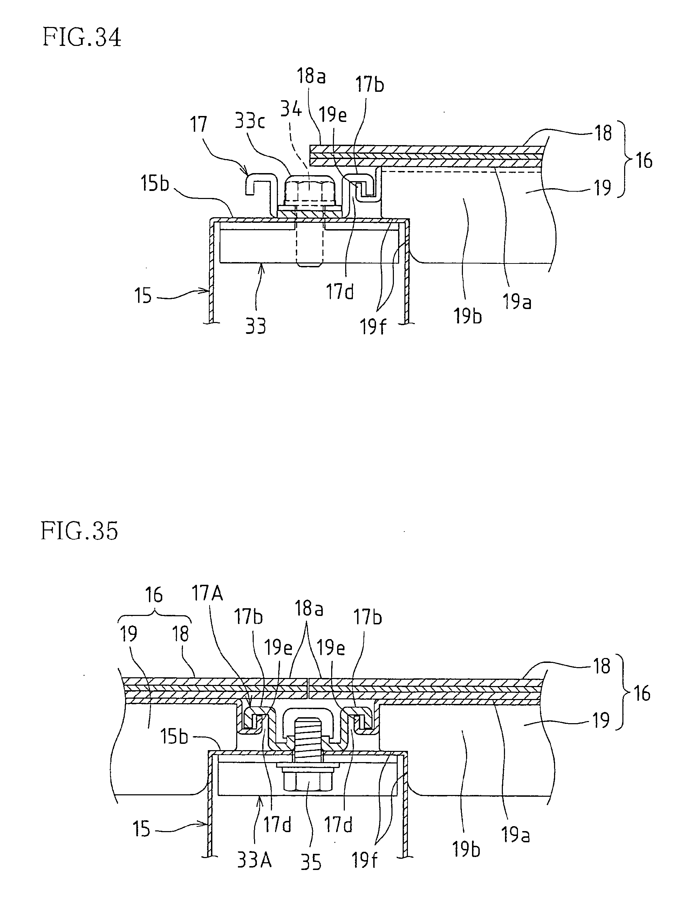

For example, as shown in FIG. 34, the engagement portion 19e may be disposed below the upper surface of the main plate 19a of the supporting member 19 with the end of the supporting member 19 first folded downwardly and then folded back upwardly. Thus, an end portion 18a of the solar cell panel 18 on the main plate 19a of the supporting member 19 may protrude to hang over the guide support 17 to at least partly cover the guide support 17. With this, the guide support 17 is hardly exposed and thus a favorable appearance can be achieved. Additionally, the proportion of the occupied area of the solar cell panel 18 in the installed area of the photovoltaic power generating system can be increased to improve the power generation efficiency.

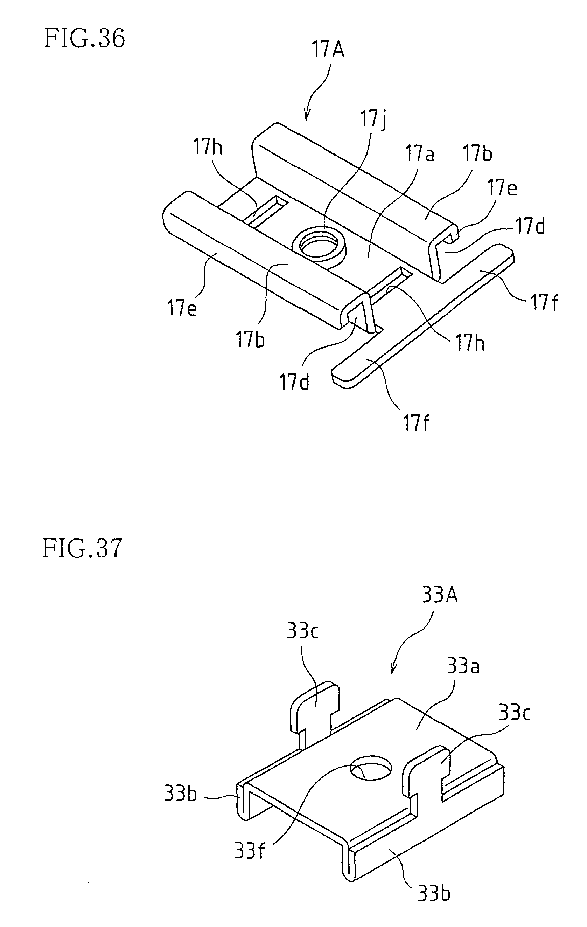

Regarding the center horizontal crosspiece 15, as shown in FIG. 35, when one end of the supporting member 19 of each of the solar cell modules 16 in the lower first row and the upper second row is supported and the end portions 18a of the solar cell panels 18 on both sides protrude, the end portions 18a of the solar cell panels 18 on both sides cover the main plate 15b of the horizontal crosspiece 15, and thus the pulling out the bolt 34 and the detachment of the guide support 17 described above are impossible. Thus, a guide support 17A shown in FIG. 36 and an attachment fitting 33A shown in FIG. 37 may be used so that a bolt 35 can be pulled out from the downward side.

In the guide support 17A shown in FIG. 36, the main plate 17a includes a screw hole 17j instead of the punch hole 17g in the main plate 17a of the guide support 17 shown in FIG. 21. In the attachment fitting 33A shown in FIG. 37, the main plate 33a includes a punched hole 33f instead of the screw hole 33d in the main plate 33a of the attachment fitting 33 shown in FIG. 23.

As is clearly seen from FIG. 35, the head portions of the supporting pieces 33c of the attachment fitting 33A protrude from the main plate 15b of the horizontal crosspiece 15, and are inserted into the respective slits 17h of the guide support 17A. Thus, the guide support 17A is disposed on the main plate 15b of the horizontal crosspiece 15. The screw hole 17j of the guide support 17A is lapped over the punched hole 33f of the attachment fitting 33A with the T-shaped hole 15d of the horizontal crosspiece 15 interposed therebetween. The bolt 35 entering from the downward side of the main plate 15b of the horizontal crosspiece 15 is screwed into the screw hole 17j of the guide support 17A through the punched hole 33f of the attachment fitting 33A and the T-shaped hole 15d of the horizontal crosspiece 15, and fastened. Thus, the guide support 17A is secured on the main plate 15b of the horizontal crosspiece 15. Here, the bolt 35 can be easily removed from the downward side of the main plate 15b of the horizontal crosspiece 15. Additionally, the worker needs not to climb on the solar cell module 16 to fasten the bolt 35. Thus, the work can be carried out more safely.

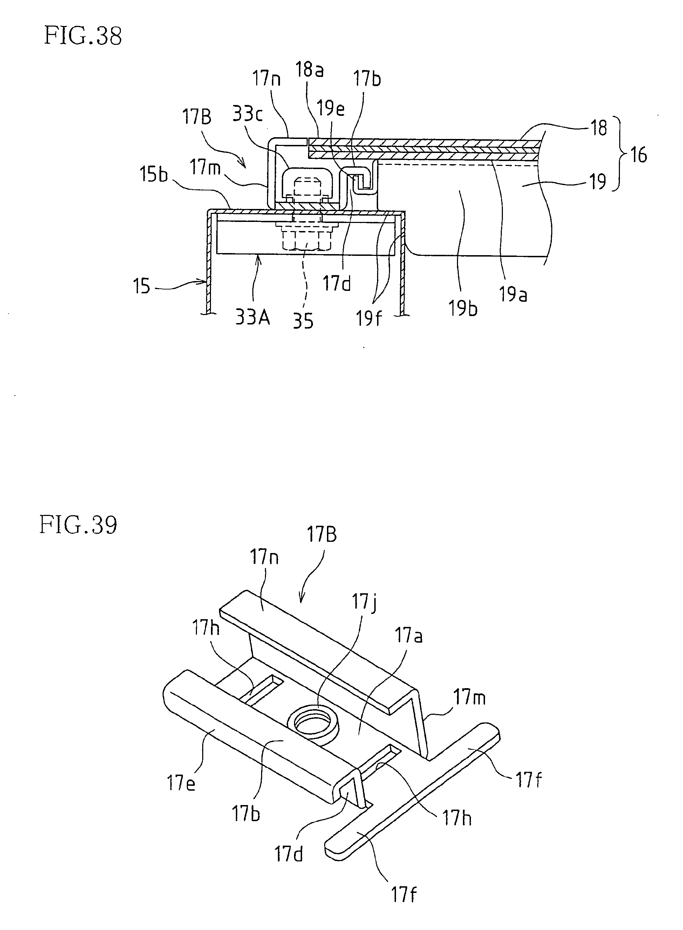

Regarding the lower or the upper horizontal crosspiece 15, as shown in FIG. 34, the bolt 34 is still exposed even when the end portion 18a of the solar cell panel 18 of the solar cell module 16 protrudes to hang over the guide support 17 and thus covers the half of the guide support 17. Thus, as shown in FIG. 38, the bolt 35 may be covered using a guide support 17B.

As shown in FIG. 39, in the guide support 17B, the side portion 17b and the fitting groove 17d are on one side of the main plate 17a, a side plate 17m and a cover plate 17n are on the other side of the main plate 17a, and the main plate 17a includes the screw hole 17j and the slits 17h.

As is clearly seen from FIG. 38, the head portions of the supporting pieces 33c of the attachment fitting 33A protrude from the main plate 15b of the horizontal crosspiece 15, and are inserted into the respective slits 17h of the guide support 17B. Thus, the guide support 17B is disposed on the main plate 15b of the horizontal crosspiece 15. The bolt 35 entering from the downward side of the main plate 15b of the horizontal crosspiece 15 is screwed into the screw hole 17j of the guide support 17B through the punched hole 33f of the attachment fitting 33A and the T-shaped hole 15d of the horizontal crosspiece 15, and fastened. Thus, the guide support 17B is secured on the main plate 15b of the horizontal crosspiece 15.

Here, the end portion 18a of the solar cell panel 18 of the solar cell module 16 protrudes to hang over the guide support 17B and thus covers the half of the guide support 17B. The cover plate 17n of the guide support 17B is positioned over the remaining half of the guide support 17B and serves as the appearance of the remaining half of the guide support 17B. Accordingly, the bolt 34 is covered with the cover plate 17n.

The bolt 35 can be easily removed from the downward side of the main plate 15b of the horizontal crosspiece 15, and the worker needs not to climb on the solar cell module 16 for fastening the bolt 35. Thus, the work can be carried out more safely.

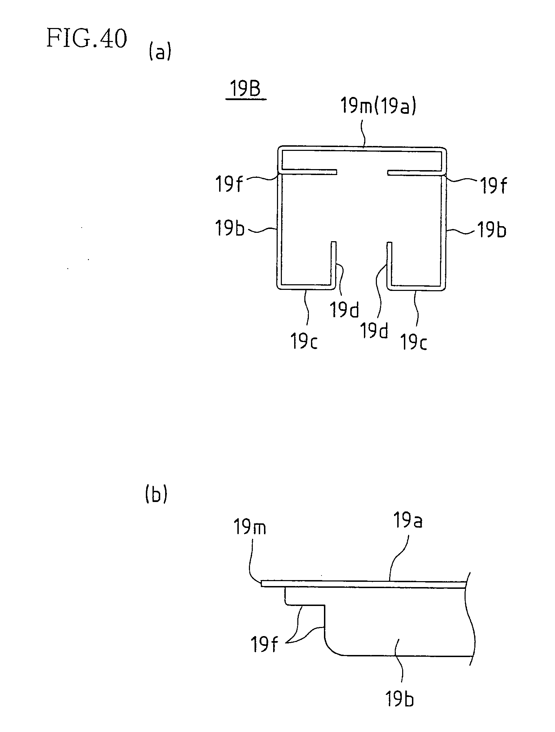

In the embodiment described above, the engagement portions 19e of the supporting member 19 are bent upwardly at the both end portions of the longitudinal direction of the main plate 19a into the L shape as shown in FIG. 5 and FIGs. 6A, 6B, and 6C. Alternatively, instead of being thus bent, the main plate 19a of a supporting member 19B may be extended as it is in the longitudinal directions, and the extended portions may be used as engagement portions 19m as shown in FIGs. 40A and 40B.

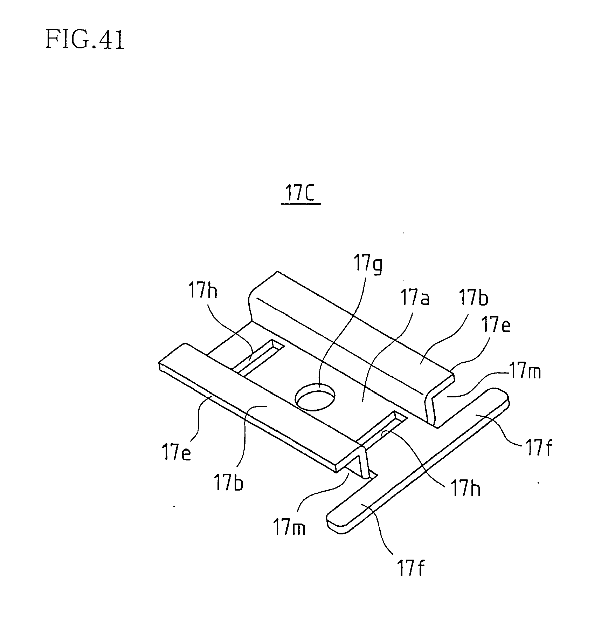

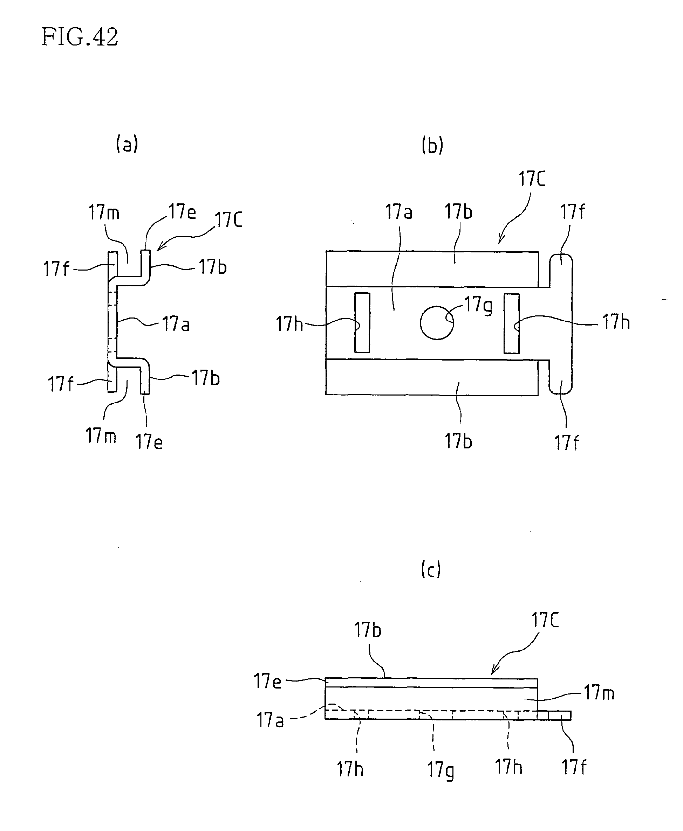

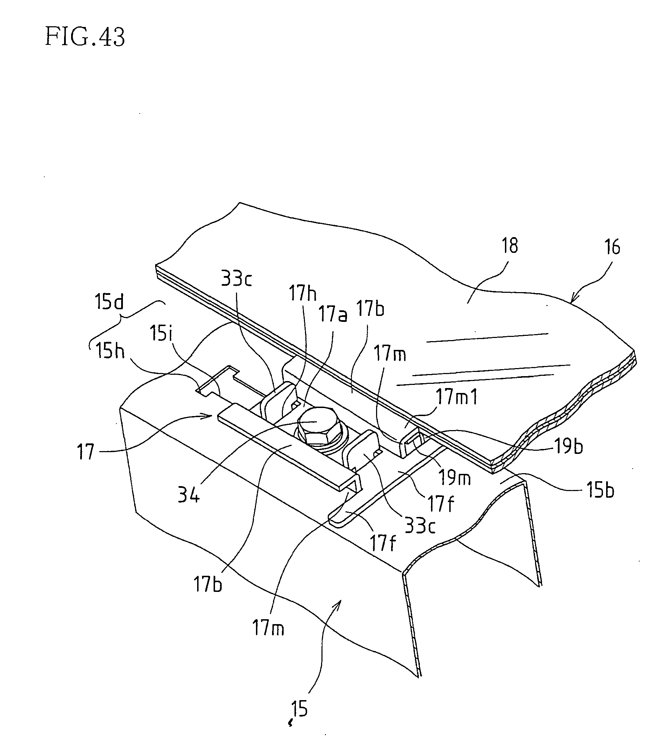

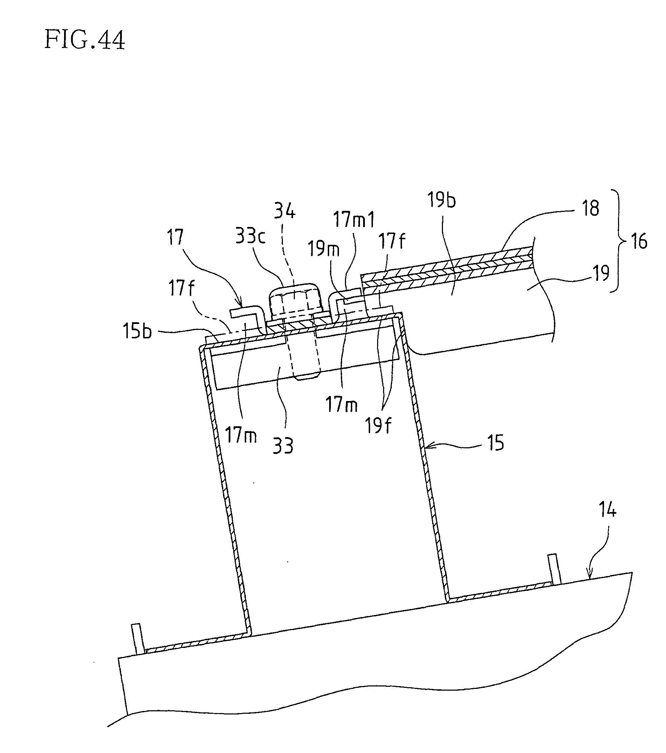

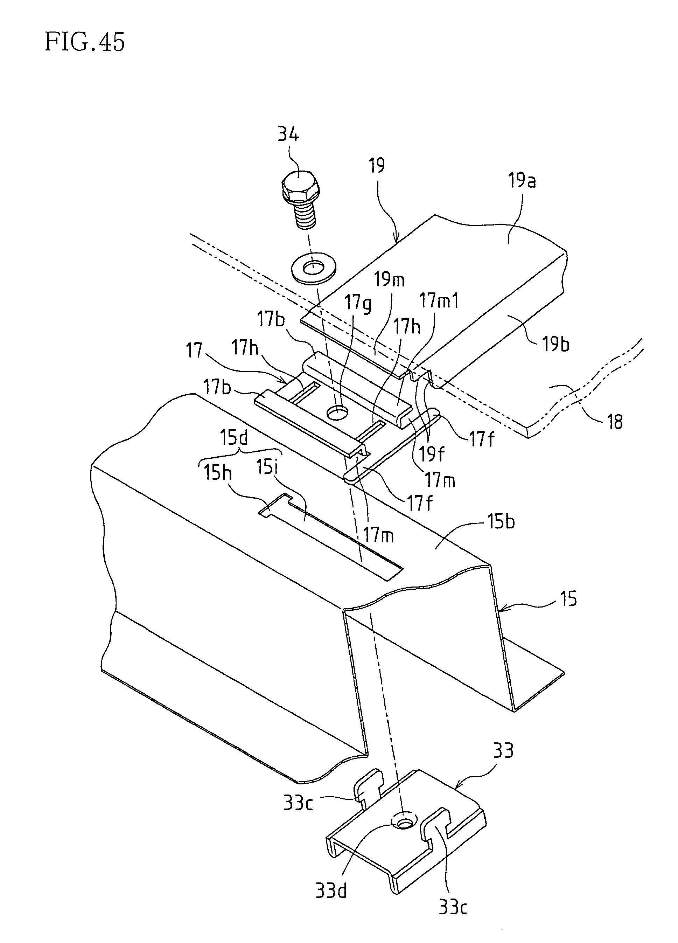

In response to this, a guide support 17C having a shape shown in FIG. 41 and FIGs. 42A, 42B, and 42C may be used. Specifically, in the guide support 17 shown in FIG. 21 and FIGs. 22A, 22B, and 22C, the both side portions of the longitudinal direction of the main plate 17a are each bent upwardly, outwardly, and downwardly in this order to form the downwardly opened fitting grooves 17d. Meanwhile, in the guide support 17C shown in FIG. 41 and FIGs. 42A, 42B, and 42C the both side portions of the longitudinal direction of the main plate 17a are each bent upwardly and outwardly in this order to form inversed L-shaped engagement grooves 17m. Specifically, as shown in FIG. 43 to FIG. 45, the fitting grooves 17m on the both sides of the guide support 17C are parallel with the horizontal crosspiece 15, and a gap opened in a side direction is formed between a horizontal portion 17m1 of each fitting groove 17m and the main plate 15b of the horizontal crosspiece 15. Other structure of the guide support 17C is same as that of the guide support 17 already described.

As a result, the engagement groove 17m of the guide support 17C engages with the engagement portion 19m of the supporting member 19B as follows. Specifically, as shown in FIGs. 43 to 45, the engagement portion 19m of the supporting member 19B enters the gap between the horizontal portion 17m1 of the fitting groove 17m and the main plate 15b of the horizontal crosspiece 15. Then, the engagement portion 19m of the supporting member 19 engages with the horizontal portion 17m1 of the fitting groove 17m in such a manner that the upper surface of the engagement portion 19m faces and contacts the lower surface of the horizontal portion 17m1.

The side plate 19b of the supporting member 19B contacts the stopper 17f of the guide support 17C, and the contact portion 19f of the supporting member 19B contacts the main plate 15b and the side plate 15a (the corner portion of the horizontal crosspiece 15) of the horizontal crosspiece 15.

With the engagement portion 19m of the supporting member 19B thus engaging with the fitting groove 17m of the guide support 17C, the end portion of the longitudinal direction of the supporting member 19B is supported, and thus the end portion of the solar cell module 16 is supported on the main plate 15b of the horizontal crosspiece 15. Here, the side plate 19b of the supporting member 19B contacts the stopper 17f of the guide support 17, and the contact portion 19f of the supporting member 19B contacts the corner portion of the horizontal crosspiece 15, and thus the solar cell module 16 is positioned.

Specifically, with the contact portion 19f of the side plate 19b of the supporting member 19B contacting the respective two sides of the main plate 15a and the side plate 15b as the corner portion of the horizontal crosspiece 15, movement of the supporting member 19B in the longitudinal direction (the Y direction in FIG. 1) can be surely restricted. With the engagement portion 19m of the supporting member 19B engaging with the fitting groove 17m of the guide support 17C, movement in the direction perpendicular to the placement surface of the attachment stand 10 can be surely prevented.

Furthermore, with the side plate 19b of the supporting member 19B contacting the stopper 17f of the guide support 17C, the supporting member 19B is prevented from sliding (sliding in the X direction in FIG. 1), and thus the solar cell module 16 is also prevented from sliding.

Furthermore, the stopper of the guide support and the guide support may be separately provided, and the guide support or the stopper may be undetachably secured on the horizontal crosspiece.

### Industrial Applicability

The present invention can be employed to support other structures other than a solar cell module. For example, a reflector panel used for solar thermal power generation can be supported. Thus, the present invention is greatly advantageous in establishing a solar thermal power generation system.

### Description of the Reference Numeral

10 Attachment stand
11 Concrete foundation
12 Base crosspiece
13 Arm
14 Vertical crosspiece
15 Horizontal crosspiece
16 Solar cell module
17, 17A, 17B, 17C Guide support
17d Fitting groove
17e Hooking portion
17f Stopper
17m Fitting groove
17m1 Horizontal portion
18 Solar cell panel
18a Solar cell
18b Light receiving surface glass
18c Rear surface glass
19, 19A, 19B Supporting member
19a Main plate
19b Side plate
19c Bottom plate
19d Inner side plate
19e, 19m Engagement portion (attached member)
19f Contact portion
19g Notch piece
20 Double-sided tape
21, 26, 32_{,} 34 Bolt
22 Reinforcement fitting
25 Pipe
27 Nut
31, 33 Attachment fitting (attaching member)
41 Terminal box

## Claims

1. A solar cell module comprising a solar cell panel having a laminated-glass structure in which a solar cell configured to carry out photoelectric conversion of sunlight is interposed between a light receiving surface glass and a rear surface glass, wherein at least one long supporting member is disposed and secured on a surface of the rear surface glass, along a longitudinal direction of the solar cell panel.

2. The solar cell module according to claim 1, wherein the at least one supporting member comprises a plurality of supporting members disposed along a short direction of the solar cell panel at an interval.

3. The solar cell module according to claim 1 or 2, wherein an end portion of longitudinal direction of the at least one supporting member protrudes from an end portion of the solar cell panel.

4. The solar cell module according to any one of claims 1 to 3, wherein the at least one supporting member comprises an engagement portion at an end portion.

5. The solar cell module according to claim 4, wherein the at least one supporting member comprises:
a long main plate;
side plates bent downwardly from both sides along a longitudinal direction of the main plate; and
engagement portions bent upwardly at both end portions of the longitudinal direction of the main plate.

6. The solar cell module according to claim 4, wherein the at least one supporting member comprises:
a long main plate;
side plates bent downwardly from both side portions along a longitudinal direction of the main plate;
bottom plates bent inwardly from lower end portions of the side plates;
inner side plates bent upwardly from opposing inner side end portions of the bottom plates; and
engagement portions bent upwardly at both end portions of the longitudinal direction of the main plate.

7. The solar cell module according to claim 5 or 6, wherein both end portions of a longitudinal direction of the side plates are each partly notched to be in an L shape.

8. The solar cell module according to any one of claims 1 to 7, wherein the at least one supporting member is adhered and secured on the rear surface glass of the solar cell panel with a double-sided tape comprising adhesion layers on both surfaces of a cushion member.

9. The solar cell module according to any one of claims 1 to 8, wherein the light receiving surface glass is thinner than the rear surface glass.

10. The solar cell module according to claim 9, wherein an external dimension of the front surface glass is equal to or smaller than an external dimension of the rear surface glass.
